(19) Europäisches Patentamt
European Patent Office
Office européen des brevets

(11) **EP 3 178 294 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(21) Anmeldenummer: **15734323.7**

(22) Anmeldetag: **26.06.2015**

(51) Int Cl.:
**H05B 3/12** (2006.01)    **H05B 3/84** (2006.01)
**B23K 26/351** (2014.01)    **B23K 101/36** (2006.01)

(86) Internationale Anmeldenummer:
**PCT/EP2015/064482**

(87) Internationale Veröffentlichungsnummer:
**WO 2016/020114 (11.02.2016 Gazette 2016/06)**

(54) **TRANSPARENTE SCHEIBE MIT ELEKTRISCHER HEIZSCHICHT, VERFAHREN ZU IHRER HERSTELLUNG UND IHRE VERWENDUNG**

TRANSPARENT PANE WITH AN ELECTRICAL HEATING LAYER, METHOD FOR ITS PRODUCTION AND ITS USE

PLAQUE TRANSPARENTE DOTÉE D'UNE COUCHE CHAUFFANTE ÉLECTRIQUE, SON PROCÉDÉ DE FABRICATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2014 EP 14180358**

(43) Veröffentlichungstag der Anmeldung:
**14.06.2017 Patentblatt 2017/24**

(73) Patentinhaber: **Saint-Gobain Glass France
92400 Courbevoie (FR)**

(72) Erfinder:
• **SCHALL, Günther
52372 Kreuzau (DE)**
• **SCHULZ, Valentin
52382 Niederzier (DE)**
• **DIMITRIJEVIC, Bojan
44803 Bochum (DE)**

(74) Vertreter: **Gebauer, Dieter Edmund
Splanemann
Patentanwälte Partnerschaft
Rumfordstraße 7
80469 München (DE)**

(56) Entgegenhaltungen:
**EP-A2- 0 524 537    WO-A1-2011/141487
WO-A2-03/051088    US-A- 5 877 473**

**Beschreibung**

Die vorliegende Erfindung liegt auf dem Gebiet der Scheibentechnik und betrifft eine transparente Scheibe mit einer elektrischen Heizschicht, ein Verfahren zu ihrer Herstellung sowie ihre Verwendung.

Transparente Scheiben mit einer elektrischen Heizschicht sind als solche bekannt und bereits vielfach in der Patentliteratur beschrieben worden. Lediglich beispielhaft sei diesbezüglich auf die deutschen Offenlegungsschriften DE 102008018147 A1 und DE 102008020986 A1 verwiesen. In Kraftfahrzeugen werden sie häufig als Windschutzscheiben eingesetzt, da das zentrale Sichtfeld aufgrund gesetzlicher Vorgaben keine wesentlichen Sichteinschränkungen aufweisen darf. Durch die von der Heizschicht erzeugte Wärme können binnen kurzer Zeit kondensierte Feuchtigkeit, Eis und Schnee entfernt werden.

Der Heizstrom wird in der Regel durch mindestens ein Paar streifen- bzw. bandförmiger Elektroden in die Heizschicht eingeleitet. Diese sollen als Sammelleiter oder Sammelelektroden den Heizstrom möglichst gleichmäßig in die Heizschicht einleiten und auf breiter Front verteilen. Der elektrische Flächenwiderstand der Heizschicht ist bei den zurzeit in der industriellen Serienfertigung eingesetzten Materialien relativ hoch und kann in der Größenordnung von einigen Ohm pro Flächeneinheit liegen. Um dennoch eine für die praktische Anwendung genügende Heizleistung zu erzielen, muss die Speisespannung entsprechend hoch sein, wobei aber beispielsweise in Kraftfahrzeugen standardmäßig nur eine Bordspannung von 12 bis 24 V zur Verfügung steht. Da der Flächenwiderstand der Heizschicht mit der Länge der Strompfade des Heizstroms zunimmt, sollten die Sammelleiter gegensätzlicher Polarität einen möglichst geringen Abstand voneinander haben. Bei Fahrzeugscheiben, die gewöhnlich breiter als hoch sind, werden die Sammelleiter leidet deshalb entlang der beiden längeren Scheibenränder angeordnet, so dass der Heizstrom über den kürzeren Weg der Scheibenhöhe fließen kann. Diese Gestaltung hat jedoch zur Folge, dass der Bereich einer Ruhe- oder Parkstellung von zum Wischen der Scheibe vorgesehenen Scheibenwischern gewöhnlich außerhalb des Heizfelds liegt, so dass dort keine ausreichende Heizleistung mehr zur Verfügung steht und die Scheibenwischer festfrieren können.

Es hat nicht an Versuchen gefehlt, dieses schwerwiegende Problem zu lösen.

So zeigt die europäische Patentanmeldung EP 0 524 527 A2 eine mit einer elektrischen Heizschicht versehene Windschutzscheibe, bei der im Bereich einer Wischerfeldablage zwei flächige Heizstreifen als Heizelemente vorgesehen sind. Die Heizstreifen sind jeweils über einen benachbart zum unteren Scheibenrand angeordneten unteren Sammelleiter an den einen Pol sowie über einen Leitungsdraht an den anderen Pol einer Spannungsquelle elektrisch angeschlossen. Nachteilig bei dieser Anordnung ist es, dass der untere Sammelleiter zusätzlich mit dem Strom für die beiden Heizstreifen belastet wird.

Des Weiteren zeigen die deutsche Patentanmeldung DE 102007008833 A1 und internationale Patentanmeldung WO 2008/104728 A2 eine elektrisch heizbare Windschutz-scheibe, die im Bereich einer Wischerfeldablage zusätzlich heizbar ist. Zu diesem Zweck sind Heizdrähte vorgesehen, die mit einem unteren Sammelleiter als Massenanschluss verbunden sind. Die Heizdrähte werden unabhängig von der Scheibenheizung im Sichtfeld mit einem Potenzial beaufschlagt. Auch bei dieser Anordnung wird der untere Sammelleiter zusätzlich mit dem Strom für die Heizdrähte belastet.

In dem europäischen Patent EP 1 454 509 B1 und dem amerikanischen Patent US 7,026,577 B2 wird eine transparente Scheibe vorgeschlagen, bei der ein heizbares Sichtfeld durch zwei Stromsammelschienen eingeschlossen wird. Dabei wird das Sichtfeld durch eine der beiden Stromsammelschienen und insbesondere durch einen entschichteten Bereich von einem Zusatzheizbereich abgeteilt. In dem Zusatzheizbereich sind weitere Stromsammelschienen gegensätzlicher Polarität vorgesehen, um die Scheibe im maskierten Bereich unterhalb des Sichtfelds zu heizen.

In der internationalen Patentanmeldung WO 2011/141487 A1 wird eine transparente Scheibe mit einer transparenten Heizbeschichtung vorgeschlagen, die sich zumindest über einen Teil der Scheibenfläche, insbesondere über deren Sichtfeld hinweg erstreckt. Die Heizbeschichtung wird durch mindestens eine heizbeschichtungsfreie Zone in mindestens eine erste Heizbeschichtungszone und eine zweite Heizbeschichtungszone unterteilt, wobei die beiden Heizbeschichtungszonen jeweils mit mindestens zwei Sammelleitern elektrisch so verbunden sind, dass nach Anlegen einer Speisespannung, die von einer Spannungsquelle bereitgestellt wird, jeweils ein Strom über mindestens ein von der ersten Heizbeschichtungszone gebildetes erstes Heizfeld und mindestens ein von der zweiten Beschichtungszone gebildetes zweites Heizfeld fließt. In der beschichtungsfreien Zone ist mindestens ein Heizelement angeordnet, das einen solchen Ohmschen Widerstand hat, dass durch Anlegen der Speisespannung an das Heizelement die Scheibe in einem die heizbeschichtungsfreie Zone enthaltenden Flächenbereich heizbar ist. Dabei ist das mindestens eine Heizelement so ausgebildet, dass durch Anlegen der Speisespannung an das Heizelement die Scheibe in zumindest einem an der beschichtungsfreien Zone angrenzenden Flächenbereich, der zumindest einen der Sammelleiter enthält, mit heizbar ist.

Nicht zuletzt wird in der internationalen Patentanmeldung WO 2012/110381 A1 eine transparente Scheibe mit einer elektrischen Heizschicht, die sich zumindest über einen Teil der Scheibenfläche erstreckt und durch Anschlussmittel mit einer Spannungsquelle elektrisch verbindbar ist, vorgeschlagen. Dabei umfassen die Anschlussmittel einen bandförmigen ersten Sammelleiter und einen bandförmigen zweiten Sammelleiter, die jeweils über die vollständige Bandlänge hinweg mit der Heizschicht direkt elektrisch leitend so verbunden sind, dass nach Anlegen einer Speisespannung ein Heizstrom über ein von der Heizschicht gebildetes Heizfeld fließt. Dabei sind der erste Sammelleiter mit mindestens einem ersten Flachbandleiter und der zweite Sammelleiter mit mindestens einem zweiten Flachbandleiter direkt elektrisch leitend verbunden. Außerdem weist die Scheibe mindestens eine heizfeldfreie Scheibenzone auf, in der mindestens ein elektrisches Zonenheizelement angeordnet ist. Das Zonenheizelement hat einen solchen ohmschen Widerstand, dass durch Anlegen der Speisespannung die heizfeldfreie Scheibenzone heizbar ist, wobei das Zonenheizelement in elektrischer Parallelschaltung zum Heizfeld mit dem mindestens einen ersten Flachbandleiter und dem mindestens einen zweiten Flachbandleiter direkt elektrisch leitend verbunden ist.

Zwar haben insbesondere die heizbaren, transparenten Scheiben der internationalen Patentanmeldungen WO 2011/141487 A1 und WO 2012/110381 A1 einen gewissen Fortschritt mit sich gebracht, indes verlangen die gestiegenen Anforderungen des Marktes weitere Verbesserungen der bisher bekannten Scheiben.

So kann das Design der Scheibe gemäß der internationalen Patentanmeldung WO 2011/141487 A1 wegen der Geometrie im Bereich der Ruhe- oder Parkstellung von Scheibenwischern nur bei einigen wenigen Automodellen verwendet werden. Darüber hinaus ist das Design hinsichtlich der Variation der Speisespannung und der Anpassung an unterschiedliche ohmsche Widerstände der Heizschicht nicht flexibel genug, um alle Anforderungen zu erfüllen.

Die heizbare, transparente Scheibe der internationalen Patentanmeldung WO 2012/110381 A1 weist die Nachteile auf, dass ein zusätzlicher Verfahrensschritt benötigt wird, um die Heizdrähte auf die Klebefolie aus beispielsweise Polyvinylbutyral (PVB) aufzubringen. Wegen dieses zusätzlichen Verfahrensschritts muss die Klebefolie vor dem Laminieren gehandhabt werden, was eine höhere Rate an Defekten durch Verunreinigungen und damit eine höhere Ausschussrate mit sich bringt.

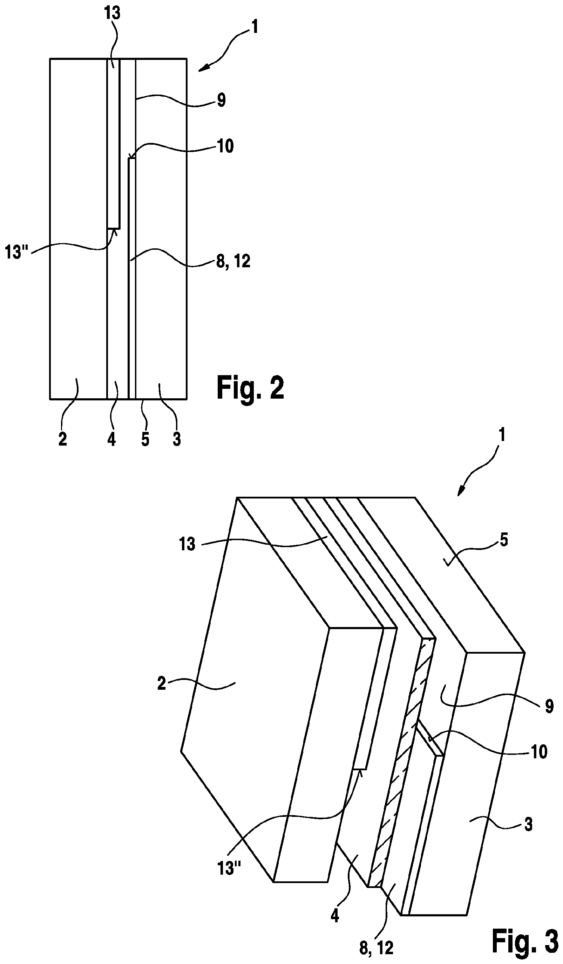

Aus dem europäischen Patent EP 1 626 940 B1 ist ein die Kondensation von Wasser verhinderndes, heizbares Glas bekannt. Das Glas umfasst auf mindestens einer seiner Seiten eine Widerstandsschicht oder Heizschicht, die eine Vielzahl von Einschnitten/Ausnehmungen umfasst, so dass das Glas einen vorbestimmten erwünschten elektrischen Widerstand erhält. Dabei wird die Widerstandsschicht oder Heizschicht durch die Einschnitte/Ausnehmungen in eine Vielzahl von miteinander verbundenen Bereichen unterteilt. Des Weiteren können die Einschnitte/Ausnehmungen von der Art sein, dass sie jeweils Bereiche von verschiedener geometrischer Beschaffenheit ausbilden, die folglich verschiedene Widerstände und daher verschiedene Heizwirkungen aufweisen. Die Einschnitte/Ausnehmungen können mithilfe von Lasertechnologie oder durch Schleifen ausgebildet werden. Die Gläser werden vor allem in Gefrierschränken, wie sie in Bars, Konditoreien oder Supermärkten üblicherweise verwendet werden, eingesetzt. Nachteilig ist hierbei, dass die Widerstandsschicht oder Heizschicht zwischen mindestens zwei Busbars oder Sammelleitern angeordnet sein muss, so dass außerhalb der von den Sammelleitern begrenzten Widerstandsschicht oder Heizschicht keine oder nur eine geringe Heizleistung vorhanden ist. Ob dieses bekannte heizbare Glas als Heizung des Bereichs der Ruhe- oder Parkstellung von Scheibenwischern geeignet ist oder nicht, kann anhand des europäischen Patents nicht entschieden werden. Hinzu kommt noch, dass der Figur 3 des europäischen Patents der Verlauf der Strompfade nicht klar entnommen werden kann, weil die zwei einander gegenüberliegenden längeren Busbars ebenfalls durch Einschnitte/Ausnehmungen in zwei elektrisch voneinander isolierte Bereiche getrennt sind.

Aus den Dokumenten WO 2011/141487 A1, WO 03/051088 A2, US 5 877 473 A und EP 0 524 537 A2 sind weitere Windschutzscheiben mit elektrisch beheizbaren Beschichtungen und speziellen Maßnahmen zur Wischerfeldbeheizung bekannt.

Demgegenüber besteht die Aufgabe der vorliegenden Erfindung darin, die bisher bekannten, heizbaren, transparenten Scheiben mit elektrischer Heizschicht und einer Heizung des Bereichs der Ruhe- oder Parkstellung von Scheibenwischern (nachstehend "Wischerparkzone" genannt) in vorteilhafter Weise weiterzubilden. Die weiterentwickelten, heizbaren, transparenten Scheiben sollen eine Heizung des Bereichs der Wischerparkzone aufweisen, die mit geringen Kosten hergestellt werden kann, wobei sich ihr Design leicht an unterschiedliche ohmsche Widerstände der elektrischen Heizschicht und unterschiedliche Höhen der Speisespannung anpassen lassen soll.

Diese und weitere Aufgaben werden nach dem Vorschlag der Erfindung durch eine heizbare, transparente Scheibe mit den Merkmalen des unabhängigen Patentanspruchs gelöst. Weitere vorteilhafter Ausgestaltungen der Erfindung sind durch die Merkmale der Unteransprüche angegeben.

In einer vorteilhaften Ausgestaltung der erfindungsgemäßen Scheibe ist die Oberfläche der ersten Scheibe, auf der die elektrisch heizbare Beschichtung angeordnet ist, über eine thermoplastische Zwischenschicht mit einer zweiten Scheibe flächig verbunden.

Als erste und gegebenenfalls zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheibe oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich >70 % aufweist. Für Scheiben, die nicht im verkehrsrelevanten Sichtfeld des Fahrers liegen, beispielsweise für Dachscheiben, kann die Transmission aber auch viel geringer sein, beispielsweise >5 %.

Die Dicke der erfindungsgemäßen Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm$^2$ bis zu 20 m$^2$ auf.

Die erfindungsgemäße Scheibe kann eine beliebige dreidimensionale Form aufweisen. Vorzugsweise hat die dreidimensionale Form keine Schattenzonen, so dass sie beispiels-weise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere Scheiben werden durch mindesten eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und/oder Polyethylenterephthalat (PET). Die thermoplastische Zwischenschicht kann aber auch beispiels-weise Polyurethan (PU), Polypropylen (PP), Polyacrylat, Polyethylen (PE), Polycarbonat (PC), Polymethylmetacrylat, Polyvinylchlorid, Polyacetatharz, Gießharze, fluorierte Ethylen-Propylen-Copolymerisate, Polyvinylfluorid und/oder Ethylen-Tetrafluorethylen-Copolymerisate und/oder Copolymere oder Gemische davon enthalten. Die thermoplastische Zwischenschicht kann durch eine oder auch durch mehrere übereinander angeordnete thermoplastische Folien ausgebildet werden, wobei die Dicke einer thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer Zwischenschicht und einer zweiten Scheibe kann die elektrisch heizbare Beschichtung direkt auf der erste Scheibe aufgebracht sein oder auf eine Trägerfolie oder auf die Zwischenschicht selbst aufgebracht sein. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die elektrisch leitfähige Beschichtung ist auf der innenseitigen Oberfläche der ersten Scheibe aufgebracht. Natürlich kann auch auf der innenseitigen Oberfläche der zweiten Scheibe eine weitere elektrisch leitfähige Beschichtung aufgebracht sein. Auch die außenseitigen Oberflächen der Scheiben können Beschichtungen aufweisen. Die Begriffe "erste Scheibe" und "zweite Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Die erfindungsgemäße transparente Scheibe umfasst eine elektrisch leitfähige, heizbare, transparente Beschichtung, die sich zumindest über einen wesentlichen Teil der Scheibenfläche, insbesondere über deren Sichtfeld, erstreckt. Die elektrisch leitfähige Beschichtung ist mit mindestens zwei, insbesondere zwei, zum elektrischen Verbinden mit den beiden Polen einer Spannungsquelle vorgesehenen Sammelelektroden elektrisch so verbunden, dass durch Anlegen einer Speisespannung ein Heizstrom über ein zwischen den beiden Sammelelektroden geformtes Heizfeld fließt. Typischerweise sind die beiden Sammelelektroden jeweils in Form einer streifen- oder bandförmigen Elektrode oder Sammelschiene oder Busbar zum Einleiten und breiten Verteilen des Stroms in der leitfähigen Beschichtung ausgebildet. Zu diesem Zweck sind sie mit der Heizschicht galvanisch verbunden.

Mindestens eine, insbesondere eine, der beiden Sammelelektroden, insbesondere die im eingebauten Zustand der transparenten Scheibe obere Sammelelektrode, kann in mindestens zwei, insbesondere zwei, voneinander getrennte Teilbereiche untergliedert sein.

In einer vorteilhaften Ausgestaltung ist die Sammelektrode als aufgedruckte und eingebrannte leitfähige Struktur ausgebildet. Die aufgedruckte Sammelelektrode enthält bevorzugt zumindest ein Metall, eine Metalllegierung, eine Metallverbindung und/oder Kohlenstoff, besonders bevorzugt ein Edelmetall und insbesondere Silber. Die Druckpaste zur Herstellung der Sammelelektrode enthält bevorzugt Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und/oder anorganischen Matrix wie Pasten oder Tinten befinden, bevorzugt als Druckpaste mit Glasfritten.

Die Schichtdicke der aufgedruckten Sammelelektrode beträgt bevorzugt von 5 μm bis 40 μm, besonders

bevorzugt von 8 $\mu$m bis 20 $\mu$m und ganz besonders bevorzugt von 8 $\mu$m bis 12 $\mu$m. Aufgedruckte Sammelelektroden mit diesen Dicken sind technisch einfach zu realisieren und weisen eine vorteilhafte Stromtragfähigkeit auf.

Der spezifische Widerstand $\rho_a$ der Sammelelektrode beträgt bevorzugt von 0.8 $\mu$Ohm•cm bis 7.0 $\mu$Ohm•cm und besonders bevorzugt von 1.0 $\mu$Ohm•cm bis 2.5 $\mu$Ohm•cm. Sammelelektroden mit spezifischen Widerständen in diesem Bereich sind technisch einfach zu realisieren und weisen eine vorteilhafte Stromtragfähigkeit auf.

Alternativ kann die Sammelelektrode aber auch als ein Streifen oder im Falle einer in Teilbereiche untergliederten Sammelelektrode als mindestens zwei, insbesondere zwei, Streifen einer elektrisch leitfähigen Folie ausgebildet sein. Die Sammelelektrode enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 $\mu$m bis 500 $\mu$m, besonders bevorzugt von 30 $\mu$m bis 300 $\mu$m. Sammelelektroden aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lötmasse, über einen elektrisch leitfähigen Kleber oder durch direktes Auflegen elektrisch leitend verbunden sein.

Die elektrisch leitfähige Beschichtung der erfindungsgemäßen Scheibe lässt sich in ein Heizfeld, d.h. den heizbaren Teil der elektrisch leitfähigen Beschichtung, der sich zwischen den beiden Sammelelektroden befindet, so dass ein Heizstrom eingeleitet werden kann, und einen Bereich außerhalb des erwähnten Heizfelds unterteilen.

Elektrisch heizbare Beschichtungen sind beispielsweise aus DE 20 2008 017 611 U1, EP 0 847 965 B1 oder WO2012/052315 A1 bekannt. Sie enthalten typischerweise eine funktionelle Schicht oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew.-% des Metalls, insbesondere mindestens 99,9 Gew.-% des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der elektrisch leitfähigen Beschichtung zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise ein Nitrid wie Siliziumnitrid oder ein Oxid wie Aluminiumoxid. Die dielektrische Schicht kann aber auch mehrere Einzelschichten umfassen, beispielsweise Einzelschichten eines dielektrischen Materials, Glättungsschichten, Anpassungsschichten, Blockerschichten und/oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete elektrisch leitfähigen Beschichtungen enthalten bevorzugt Indium-Zinnoxid (ITO), fluordotiertes Zinnoxid ($SnO_2$:F) oder aluminiumdotiertes Zinkoxid (ZnO:Al).

Die elektrisch leitfähige Beschichtung kann prinzipiell jede Beschichtung sein, die elektrisch kontaktiert werden soll. Soll die erfindungsgemäße Scheibe die Durchsicht ermöglichen, wie es beispielsweise bei Scheiben im Fensterbereich der Fall ist, so ist die elektrisch leitfähige Beschichtung bevorzugt transparent. Die elektrisch leitfähige Beschichtung ist bevorzugt für elektromagnetische Strahlung transparent, besonders bevorzugt für elektromagnetische Strahlung einer Wellenlänge von 300 bis 1300 nm und insbesondere für sichtbares Licht.

In einer vorteilhaften Ausgestaltung ist die elektrisch leitfähige Beschichtung eine Schicht oder ein Schichtaufbau mehrerer Einzelschichten mit einer Gesamtstärke von kleiner oder gleich 2 $\mu$m, besonders bevorzugt kleiner oder gleich 1 $\mu$m.

Eine vorteilhafte elektrisch leitfähige Beschichtung weist einen Flächenwiderstand von 0,4 $\Omega/\square$ bis 10 $\Omega/\square$ auf. In einer besonders bevorzugten Ausgestaltung weist die erfindungsgemäße elektrisch leitfähige Beschichtung einen Flächenwiderstand von 0,5 $\Omega/\square$ bis 1 $\Omega/\square$ auf. Beschichtungen mit derartigen Flächenwiderständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

Die elektrisch leitfähige Beschichtung kann sich über die gesamte Oberfläche der ersten Scheibe erstrecken. Die elektrisch leitfähige Beschichtung kann sich alternativ aber auch nur über einen Teil der Oberfläche der ersten Scheibe erstrecken. Die elektrisch leitfähige Beschichtung erstreckt sich bevorzugt über mindestens 50%, besonders bevorzugt über mindestens 70% und ganz besonders bevorzugt über mindestens 90% der innenseitigen Oberfläche der ersten Scheibe.

In einer vorteilhaften Ausgestaltung einer erfindungsgemäßen transparenten Scheibe als Verbundscheibe weist die innenseitige Oberfläche der ersten Scheibe einen umlaufenden Randbereich mit einer Breite von 2 mm bis 50 mm, bevorzugt von 5 mm bis 20 mm auf, der nicht mit der elektrisch leitfähigen Beschichtung versehen ist. Die elektrisch leitfähige Beschichtung weist dann keinen Kontakt zur Atmosphäre auf und ist im Inneren der Scheibe durch die thermoplastische Zwischenschicht vorteilhaft vor Beschädigungen und Korrosion geschützt.

In der erfindungsgemäßen transparenten Scheibe enthält das Heizfeld zumindest eine beschichtungsfreie Zone, in der keine elektrisch leitfähige Beschichtung vorhanden ist. Die beschichtungsfreie Zone wird von einem zumindest abschnittsweise von der elektrisch leitfähigen Beschichtung gebildeten Zonenrand begrenzt.

Insbesondere verfügt die beschichtungsfreie Zone über einen umlaufenden Zonenrand, der vollständig von der elektrisch leitfähigen Beschichtung gebildet wird.

Indes kann der Zonenrand in den umlaufenden Beschichtungsrand der elektrisch leitfähigen Beschichtung übergehen, so dass die beschichtungsfreie Zone direkt mit dem die Scheibenränder umlaufenden, beschichtungsfreien Randstreifen der erfindungsgemäßen transparenten Scheibe verbunden ist.

Die beschichtungsfreie Zone kann die unterschiedlichsten Umrisse aufweisen. So kann der Umriss quadratisch, rechteckig, trapezförmig, dreieckig, fünfeckig, sechseckig, siebeneckig oder achteckig mit abgerundeten Ecken und/oder gebogenen Kanten sowie kreisförmig, oval, tropfenförmig oder elliptisch sein. Die Umrisslinien können einen geradlinigen, wellenförmigen, zickzackförmigen und/oder sägezahnförmigen Verlauf haben. Mehrere dieser geometrischen Merkmale können bei ein und derselben beschichtungsfreien Zone verwirklicht sein.

Insbesondere dient die beschichtungsfreie Zone als Kommunikationsfenster, das für elektromagnetische Strahlung, insbesondere IR-Strahlung, Radarstrahlung und/oder Funkstrahlung, durchlässig ist. Außerdem können in dem Kommunikationsfenster auch Sensoren, beispielsweise Regensensoren, platziert werden.

Die beschichtungsfreie Zone kann beispielsweise durch Maskierung beim Aufbringen der Heizschicht auf ein Substrat oder durch Entfernen der Heizschicht beispielsweise durch mechanischen und/oder chemischen Abtrag und/oder durch Abtrag durch Bestrahlung mit elektromagnetischer Strahlung, insbesondere Laserlichtbestrahlung, nach dem Aufbringen der elektrisch heizbaren Beschichtung hergestellt werden.

Bei einer bevorzugten Ausführungsform ist mindestens eine beschichtungsfreie Zone vorhanden. Bevorzugt sind mindestens zwei und insbesondere mindestens drei beschichtungsfreie Zonen vorhanden.

Bevorzugt ist die mindestens eine beschichtungsfreie Zone oder das mindestens eine Kommunikationsfenster im eingebauten Zustand der transparenten Scheibe in deren oberen Bereich angeordnet.

Die Sammelelektroden und/oder ihre Teilbereiche werden durch eine oder mehrere Zuleitungen elektrisch kontaktiert.

Die Zuleitung ist bevorzugt als flexibler Folienleiter oder Flachleiter oder Flachbandleiter ausgebildet. Darunter wird ein elektrischer Leiter verstanden, dessen Breite deutlich größer ist als seine Dicke. Ein solcher Flachleiter ist beispielsweise ein Streifen oder Band, enthaltend oder bestehend aus Kupfer, verzinntem Kupfer, Aluminium, Silber, Gold oder Legierungen davon. Der Flachleiter weist beispielsweise eine Breite von 2 mm bis 16 mm und eine Dicke von 0,03 mm bis 0,1 mm auf. Der Flachleiter kann eine isolierende, bevorzugt polymere Ummantelung, beispielsweise auf Polyimid-Basis aufweisen. Flachleiter, die sich zur Kontaktierung von elektrisch leitfähigen Beschichtungen in Scheiben eignen, weisen lediglich eine Gesamtdicke von beispielsweise 0,3 mm auf. Derart dünne Flachleiter können ohne Schwierigkeiten zwischen den einzelnen Scheiben in der thermoplastischen Zwischenschicht eingebettet werden. In einem Flachleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Bei einer bevorzugten Ausführungsform der erfindungsgemäßen transparenten Scheibe ist jeder der mindestens zwei, insbesondere zwei, Sammelelektroden mit jeweils einem Flachleiter mit den Polen der Spannungsquelle elektrisch leitend verbunden.

Bei einer weiteren bevorzugten Ausführungsform sind die mindestens zwei, insbesondere zwei, Teilbereiche der mindestens einen, insbesondere einen, Sammelelektrode mit jeweils einem an eine Spannungsquelle angeschlossenen Flachleiter elektrisch leitend verbunden. Vorzugsweise sind die Flachleiter in dem Bereich der Teilbereiche angeordnet, der der jeweils zugeordneten zweiten Seite des Scheibenrands nahe liegt. Bei dieser Ausführungsform erfolgt die elektrische Isolierung der Flachleiter von den Stromversorgungsleitungen durch die räumliche Trennung der Komponenten

In noch einer weiteren bevorzugten Ausführungsform sind die mindestens zwei, insbesondere zwei, Teilbereiche der mindestens einen, insbesondere einen Sammel-elektrode mit einem Flachleiter elektrisch leitend verbunden. Vorzugsweise ist bei dieser Ausführungsform der Flachleiter mittig zwischen den beiden einander gegenüberliegenden Enden der Teilbereiche angeordnet. Vorzugsweise wird dies durch ein gemeinsames elektrisch leitfähiges Verbindungsteil oder durch zwei, dem jeweiligen Teilbereich zugeordnete, elektrisch leitfähige Verbindungsteile bewerkstelligt. Der Flachleiter kann mit dem elektrisch leitfähigen Verbindungsteil durch einen flachen Metallstreifen, insbesondere Kupferstreifen, verbunden sein.

Dabei sind der Flachleiter und das mindestens eine Verbindungsteil sowie gegebenenfalls der flache Metallstreifen, insbesondere Kupferstreifen, von den mindestens zwei Stromversorgungsleitungen elektrisch isoliert angeordnet.

In diesem Falle wird die elektrische Isolierung zwischen dem Flachleiter und dem Verbindungsteil einerseits und den mindestens zwei Stromversorgungsleitungen andererseits mittels einer elektrisch isolierenden Schicht, insbesondere mittels einer streifenförmigen, elektrisch isolierenden Schicht, zwischen dem Flachleiter und dem Verbindungsteil einerseits und den mindestens zwei Stromversorgungsleitungen andererseits bewerkstelligt. Die elektrisch isolierende Schicht, insbesondere die streifenförmige, elektrisch isolierende Schicht, bedeckt zumindest die Kreuzungspunkte des Verbindungsteils mit den mindestens zwei Stromversorgungsleitungen. Sie kann aber auch an die beiden einander gegenüberliegenden Endkanten der Teilbereiche anstoßen.

Vorzugsweise weist diese Anordnung insgesamt einen schichtförmigen Aufbau aus den folgenden übereinander liegenden Schichten auf:

- eine Scheibe,
- von der Isolierung bedeckte Abschnitte der Stromversorgungsleitungen,
- den Stromversorgungsleitungen benachbarte Teilbereiche der Beschichtung außerhalb des Heizfelds, an deren Zonenränder die einander gegenüberliegenden Kanten der elektrisch isolierenden Schicht anstoßen; zugleich können diese Kanten an die einander gegenüberliegenden Endkanten der beiden Teilbereiche der Sammelelektrode anstoßen
- ein der elektrisch isolierenden Schicht aufliegender Flachleiter
- Teilbereiche der Sammelelektrode sowie
- das mit ihnen elektrisch verbundene Verbindungsteil.

Ein wesentlicher Vorteil dieser Anordnung ist, dass nur noch ein Flachleiter zur Versorgung von zwei Teilbereichen einer Sammelelektrode benötigt wird, was die Herstellung der erfindungsgemäßen transparenten Scheibe wesentlich vereinfacht.

Für die erfindungsgemäße transparente Scheibe ist es wesentlich, dass sie außerhalb des Heizfelds und hiervon durch mindestens eine, insbesondere eine, der vorstehend beschriebenen Sammelelektroden räumlich getrennt längs mindestens einer, insbesondere einer, ersten Seite des Scheibenrands mindestens eine weitere, insbesondere eine, heizbare, elektrisch leitfähige Beschichtung der vorstehend beschriebenen Art aufweist. Vorzugsweise ist diese weitere heizbare, elektrisch leitfähige Beschichtung im eingebauten Zustand der erfindungsgemäßen Scheibe unterhalb der unteren Sammelelektrode und/oder oberhalb der oberen Sammelelektrode im Bereich der Wischerparkzone angeordnet.

In dieser weiteren heizbaren, elektrisch leitfähigen Beschichtung ist im Bereich der beiden zweiten Seiten des Scheibenrands jeweils mindestens eine Zusatzelektrode angeordnet. Vorzugsweise sind diese mindestens zwei Zusatzelektroden im eingebauten Zustand der erfindungsgemäßen Scheibe vertikal ausgerichtet. Sie sind jeweils über mindestens eine, insbesondere eine, Stromversorgungsleitung mit einer Sammelelektrode verbunden, die eine der nächstliegenden Sammelelektrode entgegengesetzte Polarität aufweist. Dies bedeutet, dass, wenn die obere Sammelelektrode mit dem positiv geladenen Pol einer Spannungsquelle elektrisch verbunden ist, sind die beiden oberhalb der oberen Sammelelektrode lokalisierten Zusatzelektroden über die Stromversorgungsleitungen mit der negativ geladenen unteren Sammelelektrode elektrisch verbunden. Sind die Zusatzelektroden dagegen in der unteren weiteren heizbaren, elektrisch leitfähigen Beschichtung unterhalb der beispielsweise negativ geladenen unteren Sammelelektrode angeordnet, sind sie über die Stromversorgungsleitungen mit der positiv geladenen oberen Sammelelektrode elektrisch verbunden. Der Fachmann kann weitere Konfigurationen anhand der vorliegenden technischen Lehre ohne Weiteres angeben.

Vorzugsweise sind die Zusatzelektroden und die Stromversorgungsleitungen sehr viel länger als breit. Die Länge richtet sich in der Hauptsache nach der Größe der erfindungsgemäßen Scheibe. Vorzugsweise liegt die Breite bei 10 $\mu$m bis 10 mm, insbesondere 10 $\mu$m bis 1 mm. Vorzugsweise weisen sie die gleiche Dicke wie die Sammelelektroden auf.

Besonders bevorzugt weisen die Stromversorgungsleitungen über ihre gesamte Länge hinweg eine konstante Dicke und Breite auf.

Die Stromversorgungsleitungen erstrecken sich längs des jeweiligen zugeordneten Beschichtungsrands und längs der beiden zweiten Seiten des Scheibenrands zumindest abschnittsweise

- im zugeordneten Randstreifen,
- auf dem zugeordneten Teilstück des umlaufenden Beschichtungsrands durch jeweils mindestens eine zugeordnete beschichtungsfreie Linie von dem Heizfeld elektrisch entkoppelt und/oder
- in und/oder auf der jeweils zugeordneten elektrisch leitfähigen Beschichtung außerhalb des Heizfelds durch jeweils mindestens eine zugeordnete beschichtungsfreie Linie von dem Heizfeld elektrisch entkoppelt.

Vorzugsweise verlaufen die Stromversorgungsleitungen auf der jeweils zugeordneten elektrisch leitfähigen Beschichtung außerhalb des Heizfelds.

Vorzugsweise sind die Stromversorgungsleitungen zumindest abschnittsweise geradlinig, wellenförmig, mäanderförmig, sägezahnförmig und/oder zickzackförmig. Bevorzugt verlaufen die Stromversorgungsleitungen auf ihrer gesamten Länge geradlinig.

Die erfindungsgemäße Scheibe weist in mindestens einer, insbesondere einer, weiteren heizbaren, elektrisch leitfähigen Beschichtung mindestens eine, insbesondere mindestens zwei, der jeweiligen Zusatzelektrode zugeordneten, mit der zugeordneten Sammelelektrode entgegengesetzter Polarität elektrisch gekoppelten Gegenelektrode(n) auf. Der Begriff "gekoppelt" ist im Sinne der Erfindung als "über die elektrisch leitfähige Beschichtung elektrisch verbunden" zu interpretieren.

Vorzugsweise sind die einander gegenüberliegenden Zusatzelektroden und die einander gegenüberliegenden Gegenelektrode bezüglich der Mittellinie oder Spiegelachse der erfindungsgemäßen Scheibe spiegelbildlich angeordnet.

Die erfindungsgemäße Scheibe weist außerdem in mindestens einer, insbesondere einer, weiteren heizbaren, elektrisch leitfähigen Beschichtung mindestens zwei, insbesondere zwei, spiegelbildlich (insbesondere spiegelbildlich bezüglich der vertikalen Mittellinie und Spiegelachse der transparenten Scheibe) zueinander angeordnete Systeme von jeweils mindestens vier, vorzugsweise mindestens fünf beschichtungsfreien Linien auf, die derart angeordnet sind, dass sie den bei Anlegen einer Speisespannung von den mindestens zwei Zusatzelektroden fließenden Heizstrom über jeweils mindestens eine, vorzugsweise mindestens zwei, Ihnen jeweils zugeordneten Gegenelektrode(n) zu der mindestens einen Sammelelektrode der jeweils entgegengesetzten Polarität lenken, wobei die beschichtungsfreien Linien die Strompfade $a_n$ und ihre Länge festlegen.

Die Zusatzelektrode ist direkt an eine Sammelschiene angeschlossen über die Stromversorgungsleitung. Im Gegensatz dazu ist die Gegenelektrode nicht direkt an die andere Sammelschiene entgegengesetzter Polarität angeschlossen. Die sogenannte "Gegenelektrode" ist daher eigentlich keine Elektrode im eigentlichen Sinne, sondern ein Verbindungsleiter, welcher zwei Beschichtungssegmente, die durch die beschichtungsfreien Linien gebildet werden, miteinander verbindet, so dass ein Strom zwischen den Beschichtungssegmenten fließen kann.

Der Stromfluss sämtlicher Strompfade $a_1$-$a_n$ wird getrieben durch die Potentialdifferenz zwischen der Zusatzelektrode (angeschlossen an die erste Sammelschiene) und der zweiten Stromsammelschiene. Die durch die beschichtungsfreien Linien gebildete Segmentierung der leitfähigen Beschichtung sowie die Verbindung der Segmente mittels der Gegenelektrode(n)/ Verbindungsleiter dienen der Lenkung des Stromflusses in Form der Strompfade $a_1$-$a_n$.

Erfindungsgemäß gilt für die Strompfade $a_n$ in einem System beschichtungsfreier Linien die Gleichung I:

$$VH_1 = h_1: b_n = 0{,}5 \text{ bis } 2{,}0, \text{ vorzugsweise } 0{,}75 \text{ bis } 1{,}5 \text{ und insbesondere } 0{,}8 \text{ bis } 1{,}2 \qquad (I),$$

wobei $VH_1$ für das mathematische Verhältnis ($h_1$:$b_n$), n für eine ganze Zahl von 2 bis 30, vorzugsweise 2 bis 25 und insbesondere 3 bis 20 steht. $h_1$ steht für die Höhe des Strompfads $a_1$, $b_n$ für die Breite eines Strompfads $a_n$.

Die Höhe $h_1$ des Strompfads $a_1$ ist die gedachte Strecke, die vertikal zu der Fließrichtung des Stroms zwischen zwei begrenzenden beschichtungsfreien Linien angeordnet ist.

$a_1$ ist der Strompfad von der Zusatzelektrode bis zum nächstgelegenen, gegenüberliegenden Abschnitt der Gegenelektrode (Verbindungsleiter). $a_2$ bis $a_n$ bezeichnen die weiteren Strompfade. Mit $a_1$-$a_n$ können die Strompfade selbst bezeichnet werden oder auch die Länge derselben.

Die Breite $b_n$ eines Strompfads $a_n$ ist die gedachte Strecke, die vertikal zu der Fließrichtung des Stroms zwischen zwei begrenzenden beschichtungsfreien Linien angeordnet ist.

Vorzugsweise sind die Breiten $b_n$ parallel oder in etwa parallel, vorzugsweise in einem gedachten Winkel von $\pm$ 30°, bevorzugt $\pm$ 20° und insbesondere $\pm$ 10° zueinander angeordnet.

Die Verhältnisse der Längen der einzelnen Strompfade $a_1$ bis $a_n$ hat keine Auswirkungen auf die spezifische Heizleistung in diesen Strompfadabschnitten. Die spezifische Heizleistung wird nur durch die Gesamtlänge, d.h. durch den Gesamtwiderstand der Strompfade ($a_1 + a_2 + a_3 + \dots a_n$) sowie dem Verhältnis $VH_1$ der Breite der Abschnitte beeinflusst.

Die beschichtungsfreien Linien verlaufen zumindest abschnittsweise durchgehend und/oder als unterbrochene Linien diskreter Einschnitte. Vorzugsweise verlaufen sie in ihrer gesamten Länge durchgehend, d.h. ohne Einschnitte.

Die Länge der beschichtungsfreien Linien kann breit variieren und daher in vorteilhafter Weise den Erfordernissen des Einzelfalls angepasst werden. Die Breite der beschichtungsfreien Linien ist sehr viel kleiner als ihre Länge und kann in Ihrem Verlauf variieren. Vorzugsweise ist die Breite auf dem ganzen Verlauf konstant. Bevorzugt liegt die Breite im Bereich von 10 $\mu$m bis 1 mm.

Durch dieses System von mindestens vier beschichtungsfreien Linien werden mindestens zwei Strompfade

$a_n$ in der betreffenden unteren und/oder oberen, insbesondere unteren, weiteren heizbaren, elektrisch leitfähigen Beschichtung(en) festgelegt. Bei Anlegen einer Speisespannung fließt in diesem System der Heizstrom von der mindestens einen Zusatzelektrode über die mindestens eine Gegenelektrode (Verbindungsleiter) über die Strompfade an zu der unteren und/oder oberen Sammelelektrode(n).

Dabei es ist ein ganz besonderer Vorteil des erfindungsgemäßen Systems, dass dadurch die untere und/oder obere, weitere(n), heizbare(n), elektrisch leitfähige(n) Beschichtung(en) gleichmäßig aufgeheizt wird oder werden, wobei die spezifische Heizleistung bei 300 bis 900 W/m$^2$ und bevorzugt bei 350 bis 800 W/m$^2$ liegt.

Ein weiterer besonderer Vorteil der Konfiguration aus Zusatzelektroden, Gegenelektroden (Verbindungsleiter) und Systemen beschichtungsfreier Linien ist, dass die gesamte Konfiguration durch einfache Parallelverschiebungen beispielsweise der Zusatzelektroden und/oder der Gegenelektrode (Verbindungsleiter) in einfacher Weise den Erfordernissen des Einzelfalls angepasst werden kann, ohne dass sich die spezifische Heizleistung in nachteiliger Weise - beispielsweise durch das Auftreten von Hot-Spots und/oder Cold-Spots - ändert. Die für den Einzelfall optimale Konfiguration kann in einfacher Weise mithilfe üblicher und bekannter Simulationsprogramme ermittelt werden.

Insgesamt verhindert die Konfiguration der erfindungsgemäßen Scheibe auch bei besonders tiefen Temperaturen <0°C, insbesondere <-10°C, sehr effektiv, dass ruhende Scheibenwischer in der Wischerparkzone festfrieren.

In einer bevorzugten Ausführungsform der erfindungsgemäßen transparenten Scheibe sind die Bereiche, in denen die Sammelelektroden, der oder die Flachleiter, die Zusatzelektrode oder die Zusatzelektroden, die Stromversorgungsleitungen sowie der System der beschichtungsfreien Linien angeordnet sind, teilweise oder in Gänze durch übliche und bekannte, optisch deckende, opake oder undurchsichtige Maskierungsstreifen optisch maskiert. Der Maskierungsstreifen verdeckt diese und andere funktionalen Elemente in diesen Bereichen und schützt sie auch vor UV-Strahlung, die die funktionalen Elemente schädigen kann. Im Einzelnen umfasst der schwarze Maskierungsstreifen einen optisch deckenden, opaken Teilbereichs, der an seinem Rand in den optisch partiell transparenten Teilbereich übergeht. Der optisch partiell transparente Teilbereich ist beispielsweise ein Punktraster. Vorzugsweise wird der Maskierungsstreifen auf die Innenseite, d.h. der der Innenscheibe zugekehrten Seite der Außenscheibe durch Siebdruck aufgebracht und eingebrannt, bevor die beiden Scheiben mit der Klebeschicht zusammengefügt werden.

Vorzugsweise werden die Vorprodukte der Maskierungsstreifen durch Siebdruck auf die noch unbeschichteten Scheiben aufgetragen, wonach die aufgetragenen Schichten eingebrannt werden.

Die erfindungsgemäßen Scheiben können in üblicher und bekannter Weise hergestellt werden. Vorzugsweise werden sie mithilfe des erfindungsgemäßen Verfahrens hergestellt.

Das erfindungsgemäße Verfahren umfasst die folgenden Verfahrensschritte:

(A) Herstellen einer elektrisch leitfähigen Beschichtung;
(B) Herstellen mindestens eines beschichtungsfreien Kommunikationsfensters in der elektrisch leitfähigen Beschichtung des Heizfelds;
(C) Ausbilden von

(c1) mindestens zwei mit den beiden Polen einer Spannungsquelle verbundenen Sammelelektroden, die mit der elektrisch leitfähigen Beschichtung elektrisch verbunden sind, so dass durch Anlegen einer Speisespannung ein Heizstrom über ein zwischen den beiden Sammelelektroden befindliches Heizfeld fließt, und/oder
(c2) mindestens zwei mit den beiden Polen einer Spannungsquelle verbundenen Sammelelektroden, die mit der elektrisch leitfähigen Beschichtung elektrisch verbunden sind, wobei mindestens eine der beiden Sammelelektroden in mindestens zwei voneinander räumlich getrennte Teilbereiche untergliedert ausgeführt wird;

(D) Herstellen von

(d1) mindestens zwei bezüglich der Mittellinie (und Spiegelachse) der transparenten Scheibe spiegelbildlich einander gegenüberliegenden Zusatzelektroden;
(d2) mindestens zwei bezüglich der Mittellinie (und Spiegelachse) der transparenten Scheibe spiegelbildlich einander gegenüberliegenden und den Zusatzelektroden elektrisch zugeordneten Gegenelektroden (Verbindungsleiter), die bei Anlegen einer Speisespannung mit der Sammelelektrode entgegengesetzter Polarität elektrisch gekoppelt (das heißt über die elektrisch leitfähige Beschichtung elektrisch verbunden) sind;
(d3) mindestens zwei bezüglich der Mittellinie (und Spiegelachse) der transparenten Scheibe spiegelbildlich zueinander angeordnete, jeweils mindestens eine Zusatzelektrode mit jeweils mindestens einer Sammelelektrode oder jeweils mindestens einem ihrer Teilbereiche verbindenden Stromversorgungsleitungen), die längs des jeweiligen zugeordneten Beschichtungsrands und längs der beiden zweiten Seiten des Scheibenrands zumindest abschnittsweise

- im jeweils zugeordneten Randstreifen,

- auf dem zugeordneten Teilstück des umlaufenden Beschichtungsrands durch jeweils mindestens eine zugeordnete beschichtungsfreie Linie von dem Heizfeld elektrisch entkoppelt und/oder
- in der jeweils zugeordneten elektrischen Beschichtung außerhalb des Heizfelds durch jeweils mindestens eine zugeordnete beschichtungsfreie Linie elektrisch entkoppelt verlaufen;

(E) Ausbilden von

(e1) mindestens zwei längs der Stromversorgungsleitungen auf der Seite des Heizfelds verlaufende beschichtungsfreie Linien sowie

(e2) mindestens zwei spiegelbildlich einander gegenüber liegenden Systemen von jeweils mindestens vier beschichtungsfreien Linien, die derart angeordnet werden, dass sie bei Anlegen einer Speisespannung den von den mindestens zwei Zusatzelektroden fließenden Heizstrom über mindestens zwei Strompfade $a_n$ und über die mindestens zwei Ihnen jeweils zugeordneten Gegenelektroden (Verbindungsleiter) zu der mindestens einen Sammelelektrode jeweils entgegengesetzter Polarität lenken, wobei für die Strompfade $a_n$ in dem System beschichtungsfreier Linien die Gleichung I gilt:

$$VH_1 = h_1 : b_n = 0,5 \text{ bis } 2,0, \text{ vorzugsweise } 0,75 \text{ bis } 1,5 \text{ und insbesondere } 0,8 \text{ bis } 1,2 \quad (I),$$

wobei

$n$ für eine ganze Zahl von 2 bis 30 steht, vorzugsweise 2 bis 25 und insbesondere 3 bis 20,
($a_1$) den Strompfad von der Zusatzelektrode bis zum nächstgelegenen gegenüberliegenden Abschnitt der Gegenelektrode (Verbindungsleiter) bezeichnet,
($h_1$) für die Höhe des Strompfads $a_1$ steht
($a_2...a_n$) die weiteren Strompfade bezeichnet,
$b_n$ für die Breite eines weiteren Strompfads $a_n$ steht und
($VH_1$) für das mathematische Verhältnis ($h_1:b_n$) steht.;

(F) wobei die Verfahrensschritte (B) und (E) nacheinander oder gleichzeitig durchgeführt werden und
(G) die Verfahrensschritte (C) und (D) gleichzeitig oder nacheinander sowie vor oder nach den Verfahrensschritten (B) und (E) durchgeführt werden.

Die Verhältnisse der Längen der einzelnen Strompfade $a_1$ bis $a_n$ hat keine Auswirkungen auf die spezifische Heizleistung in diesen Strompfadabschnitten. Die spezifische Heizleistung wird nur durch die Gesamtlänge, d.h. durch den Gesamtwiderstand der Strompfade ($a_1 + a_2 + a_3 + ....... a_n$) sowie dem Verhältnis $VH_1$ der Breite der Abschnitte beeinflusst.

In einer weiteren bevorzugten Ausführungsform des erfindungsgemäßen Verfahrens werden die mindestens vier beschichtungsfreien Linien sowie die mindestens zwei Systeme durch Laserablation der elektrisch leitfähigen Beschichtung innerhalb und außerhalb des Heizfelds hergestellt.

In einer weiteren bevorzugten Ausführungsform werden die Verfahrensschritte (C) und (D) mithilfe des Siebdrucks durchgeführt.

Im Einzelnen kann das Aufbringen der elektrisch leitfähigen Beschichtung im Verfahrensschritt (A) durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe, wenn die erfindungsgemäße Scheibe als Verbundscheibe ausgestaltet ist. Die elektrisch leitfähige, heizbare Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (A) einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und/oder der Verringerung des Flächenwiderstands der elektrisch leitfähigen Beschichtung dienen.

Die erste Scheibe kann nach Verfahrensschritt (A) gebogen werden, typischerweise bei einer Temperatur von 500°C bis 700°C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (A) gebogen werden, beispielsweise wenn die elektrisch leitfähige Beschichtung nicht dazu geeignet ist, einen Biegeprozess ohne Beschädigungen zu überstehen.

Das Aufbringen der Sammelelektroden in Verfahrensschritt (C) und der Stromversorgungsleitungen in Verfahrensschritt (E) erfolgt bevorzugt durch Aufdrucken und Einbrennen einer elektrisch leitfähigen Paste in einem Siebdruckverfahren oder in einem Inkjet-Verfahren. Alternativ können die Sammelelektroden und die Stromversorgungsleitungen als Streifen einer elektrisch leitfähigen Folie auf die elektrisch leitfähige Beschichtung aufgebracht, bevorzugt aufgelegt, angelötet oder angeklebt werden.

Bei Siebdruckverfahren erfolgt die laterale Formgebung durch die Maskierung des Gewebes, durch das die Druckpaste mit den Metallpartikeln gedrückt wird. Durch eine geeignete Formgebung der Maskierung kann beispielsweise die Breite der Sammelelektrode besonders einfach vorgegeben und variiert werden.

Die beschichtungsfreien Zonen werden im Verfahrensschritte (B) bevorzugt durch mechanisches Abtragen der im Verfahrensschritt (A) hergestellten heizbaren Beschichtung hergestellt. Das mechanische Abtragen kann auch durch die Behandlung mit geeigneten Chemikalien und/oder durch die Bestrahlung mit elektromagnetischer Strahlung ersetzt oder ergänzt werden.

Eine vorteilhafte Weiterbildung des erfindungsgemäßen Verfahrens umfasst mindestens die folgenden weiteren Schritte:

- Anordnen einer thermoplastischen Zwischenschicht auf der beschichteten Oberfläche der ersten Scheibe und Anordnen einer zweiten Scheibe auf der thermoplastischen Zwischenschicht und
- Verbinden der ersten Scheibe und der zweiten Scheibe über die thermoplastische Zwischenschicht.

In diesen Verfahrensschritten wird die erste Scheibe so angeordnet, dass diejenige ihrer Oberflächen, welche mit der heizbaren Beschichtung versehen ist, der thermoplastischen Zwischenschicht zugewandt ist. Die Oberfläche wird dadurch zur innenseitigen Oberfläche der ersten Scheibe.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130°C bis 145°C über etwa 2 Stunden durchgeführt werden. An sich bekannte Vakuumsack- oder Vakuumringverfahren arbeiten beispielsweise bei etwa 200 mbar und 80°C bis 110°C. Die erste Scheibe, die thermoplastische Zwischenschicht und die zweite Scheibe können auch in einem Kalander zwischen mindestens einem Walzenpaar zu einer Scheibe gepresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40°C bis 150°C. Kombinationen von Kalander- und Autoklavverfahren haben sich in der Praxis besonders bewährt. Alternativ können Vakuumlaminatoren eingesetzt werden. Diese bestehen aus einer oder mehreren heizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die erfindungsgemäße transparente Scheibe, insbesondere die mithilfe des erfindungsgemäßen Verfahrens hergestellte erfindungsgemäße transparente Scheibe, kann hervorragend als funktionales und/oder dekoratives Einzelstück und/oder als Einbauteil in Möbeln, Geräten und Gebäuden sowie in Fortbewegungsmitteln zur Fortbewegung auf dem Lande, in der Luft oder zu Wasser, insbesondere in Kraftfahrzeugen, beispielsweise als Windschutz-scheibe, Heckscheibe, Seitenscheibe und/oder Glasdach verwendet werden. Vorzugsweise ist die erfindungsgemäße transparente Scheibe als Fahrzeug-Windschutzscheibe oder Fahrzeug-Seitenscheibe ausgeführt.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

**Kurze Beschreibung der Figuren**

Die Erfindung wird nun anhand von Ausführungsbeispielen näher erläutert, wobei Bezug auf die beigefügten Figuren genommen wird. Es zeigen in vereinfachter, nicht maßstabsgetreuer Darstellung:

Figur 1   eine Draufsicht auf eine erfindungsgemäße Windschutzscheibe 1 in vereinfachter Darstellung;

Figur 2   eine Darstellung eines vertikalen Schnitts durch einen Ausschnitt der erfindungsgemäßen Windschutzscheibe gemäß der Figur 1;

Figur 3   eine perspektivische Darstellung eines Ausschnitts aus der erfindungsgemäßen Windschutzscheibe gemäß

Figur 4    eine Draufsicht auf den detaillierten Ausschnitt B aus der erfindungsgemäßen Windschutzscheibe 1 gemäß der Figur 1;

Figur 5    eine Draufsicht auf den detaillierten Ausschnitt A aus einer beispielhaften Ausgestaltung der erfindungsgemäßen Windschutzscheibe 1 gemäß der Figur 1;

Figur 6    eine Draufsicht auf den detaillierten Ausschnitt A aus einer weiteren beispielhaften Ausgestaltung der erfindungsgemäßen Windschutzscheibe 1 gemäß der Figur 1 zusammen mit dem vergrößerten Ausschnitt C;

Figur 7    eine Draufsicht auf den detaillierten Ausschnitt A aus noch einer weiteren beispielhaften Ausgestaltung der erfindungsgemäßen Windschutzscheibe 1 gemäß der Figur 1 zusammen mit dem vergrößerten Ausschnitt D;

Figur 8    eine Draufsicht auf den detaillierten Ausschnitt aus noch einer weiteren beispielhaften Ausgestaltung der erfindungsgemäßen Windschutzscheibe 1.

**Ausführliche Beschreibung der Figuren**

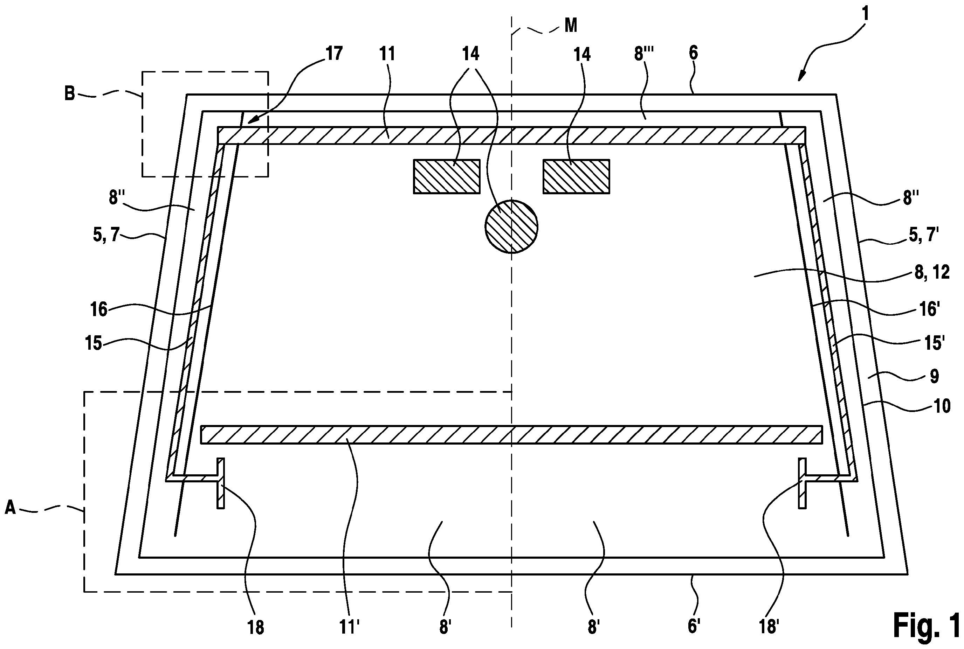

**Figur 1 in Verbindung mit den Figuren 2, 3 und 4**

Die Figur 1 zeigt eine transparente Windschutzscheibe 1 eines Kraftfahrzeugs von der Innenseite her gesehen in vereinfachter Darstellung. Die Windschutzscheibe ist hier beispielsweise als Verbundglasscheibe ausgeführt, deren Aufbau anhand der Darstellung eines vertikalen Schnitts durch einen Ausschnitt der Windschutzscheibe 1 in der Figur 2 und anhand der perspektivischen Darstellung eines Ausschnitts der Windschutzscheibe 1 in der Figur 3 veranschaulicht wird.

Demnach umfasst die Windschutzscheibe 1 zwei starre Einzelscheiben, nämlich eine Außenscheibe 2 und eine Innenscheibe 3, die durch eine thermoplastische Klebeschicht 4, hier beispielsweise eine Polyvinylbutyralfolie (PVB), eine Ethylen-Vinylacetat-Folie (EVA) oder eine Polyurethanfolie (PU), haftfest miteinander verbunden sind. Die beiden Einzelscheiben 2, 3 sind in etwa von gleicher Größe und Form und können beispielsweise eine trapezförmig geschwungene Kontur haben, was in den Figuren nicht näher dargestellt ist. Sie sind beispielsweise aus Glas gefertigt, wobei sie auch aus einem nichtgläsernen Material wie Kunststoff aufgebaut sein können. Für andere Anwendungen als Windschutzscheiben wäre es auch möglich, die beiden Einzelscheiben 2, 3 aus einem flexiblen Material herzustellen. Die Kontur der Windschutzscheibe 1 ergibt sich durch einen den beiden Einzelscheiben 2, 3 gemeinsamen Scheibenrand 5, wobei die Windschutz-scheibe 1 oben und unten über zwei einander gegenüber liegende erste Seiten 6, 6' sowie links und rechts über zwei einander gegenüberliegende zweite Seiten 7, 7' verfügt.

Wie in den Figuren 2 und 3 dargestellt, ist auf der mit der Klebeschicht 4 verbundenen Seite der Innenscheibe 3 eine transparente, elektrisch leitfähige Beschichtung 8 abgeschieden. Die heizbare, elektrisch leitfähige Beschichtung 8 ist hier beispielsweise im Wesentlichen vollflächig auf der Innenscheibe 3 aufgebracht, wobei ein allseitig umlaufender Randstreifen 9 nicht beschichtet ist, so dass ein Beschichtungsrand 10 der elektrisch leitfähigen Beschichtung 8 gegenüber dem Scheibenrand 5 nach innen rückversetzt ist. Hierdurch wird eine elektrische Isolierung der elektrisch leitfähigen Beschichtung 8 nach außen bewirkt. Zudem wird die elektrisch leitfähige Beschichtung 8 gegen vom Scheibenrand 5 vordringende Korrosion geschützt.

Die elektrisch leitfähige Beschichtung 8 umfasst in bekannter Weise eine nicht dargestellte Schichtenfolge mit mindestens einer elektrisch heizbaren, metallischen Teilschicht, vorzugsweise Silber, und gegebenenfalls weiteren Teilschichten wie Entspiegelungs- und Blockerschichten. Vorteilhaft ist die Schichtenfolge thermisch hoch belastbar, so dass sie die zum Biegen der Glasscheiben erforderlichen Temperaturen von typischerweise mehr als 600 °C ohne Beschädigung übersteht, wobei aber auch thermisch gering belastbare Schichtenfolgen vorgesehen sein können. Die elektrisch leitfähige Beschichtung 8 kann gleichermaßen als metallische Einzelschicht aufgebracht sein. Ebenso ist denkbar, die elektrisch leitfähige Beschichtung 8 nicht direkt auf die Innenscheibe 3 aufzubringen, sondern diese zunächst auf einem Träger, beispielsweise eine Kunststofffolie, aufzubringen, der anschließend mit der Außen- und Innenscheibe 2, 3 verklebt wird. Alternativ kann die Trägerfolie mit Klebefolien (z.B. PVB-Folien) verbunden und als Dreischichtenanordnung (Trilayer) mit Innen- und Außenscheibe 2, 3 verklebt werden. Die heizbare, elektrisch leitfähige Beschichtung 8 wird vorzugsweise durch Sputtern oder Magnetron-Kathodenzerstäubung auf die Innen- oder Außenscheibe 2, 3 aufgebracht.

Wie in der Figur 1 dargestellt, ist die elektrisch leitfähige Beschichtung 8 angrenzend an die ersten Seiten 6, 6', d.h. am oberen und unteren Scheibenrand 5, mit einer bandförmigen oberen Sammelelektrode oder Busbar 11 und einer bandförmigen unteren Sammelelektrode 11' elektrisch leitend verbunden. Die obere Sammelelektrode 11 und die untere Sammel-elektrode 11' sind zur Verbindung mit jeweils einem Pol einer nicht dargestellten Spannungsquelle vorgesehen. Die beiden Sammelelektroden 11, 11' gegensätzlicher Polarität dienen einer gleichmäßige Einleitung und Verteilung des Heizstroms in das zwischen ihnen befindliche Heizfeld 12 der heizbaren Beschichtung 8. Die beiden Sammelelektroden 11, 11' sind beispielsweise auf die elektrisch leitfähige Beschichtung 8 gedruckt und haben jeweils einen zumindest annähernd geradlinigen Verlauf.

Die Sammelelektroden 11, 11' können aber auch in jeweils zwei voneinander räumlich getrennte Teilbereiche untergliedert sein.

Die im eingebauten Zustand der Windschutzscheibe 1 obere Sammelelektrode 11 trennt das Heizfeld 12 von dem längs der oberen ersten Seite 6 des Scheibenrands 5 verlaufenden Teilbereich 8''' der elektrisch leitfähigen Beschichtung 8 ab.

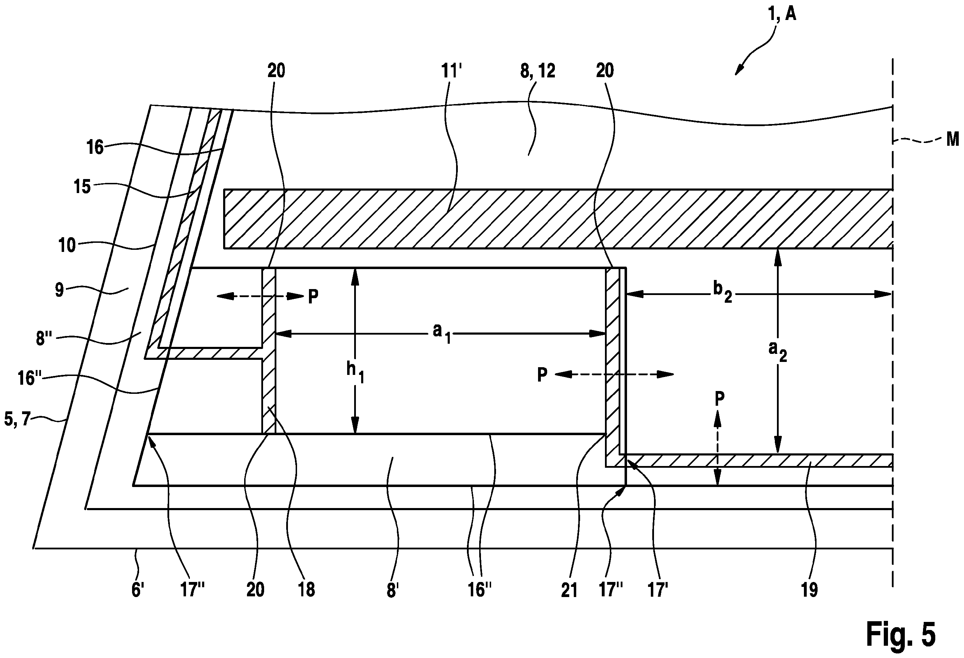

Die im eingebauten Zustand der Windschutzscheibe 1 untere Sammelelektrode 11' trennt das Heizfeld 12 von dem längs der unteren ersten Seite 6' verlaufenden Teilbereich 8' ab. Dieser Teilbereich 8' dient der Heizung der Wischerparkzone. Weitere Details verschiedener erfindungsgemäßer Ausführungsformen gehen aus den Ausschnitten A der Figuren 5 bis 9 hervor.

Unterhalb der oberen Sammelelektrode 11 sind 3 beschichtungsfreie Kommunikationsfenster im Heizfeld 12 mittig spiegelbildlich angeordnet. D.h., sie werden durch die gedachte vertikale Mittellinie M oder Spiegelachse halbiert.

Von den beiden Enden der oberen Sammelelektrode 11 verlaufen in den Teilbereichen 8'' der Beschichtung 8 längs des jeweiligen zugeordneten Teilbereichs des Beschichtungsrands 10 zwei spiegelbildlich zueinander angeordnete Stromversorgungsleitungen 15, 15' zu den einander gegenüberliegenden Zusatzelektroden 18, 18' im Teilbereich 8'. Die Stromversorgungsleitungen 15, 15' und die Zusatzelektroden 18, 18' sind aus demselben Material gefertigt wie die Sammelelektroden 11, 11'.

Die Stromversorgungsleitungen 15, 15' und die Zusatzelektroden 18, 18' werden durch die ihnen jeweils zugeordneten, längs der Stromversorgungsleitungen 15, 15' auf der Seite des Heizfelds 12 verlaufenden, beschichtungsfreien Linien 16, 16' von dem Heizfeld 12 elektrisch entkoppelt. Die beschichtungsfreien Linien 16, 16' weisen eine Breite von 100 $\mu$m auf. Sie sind vorzugsweise durch Laserablation herstellbar.

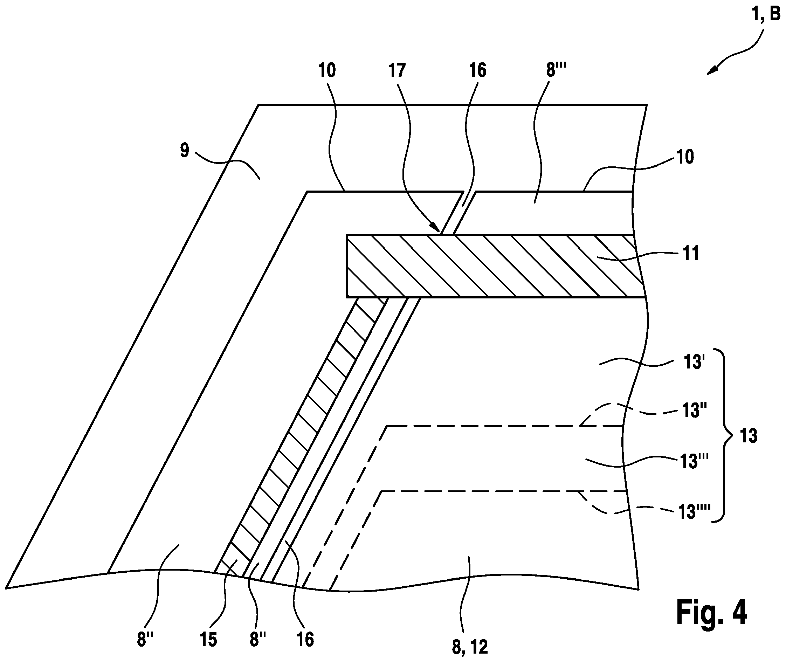

Die beschichtungsfreien Linien 16, 16' verlaufen bis zur oberen Sammelelektrode 11 und setzen sich oberhalb der oberen Sammelelektrode 11 bis zum umlaufenden Randstreifen 9 fort und trennen die längs der zweiten Seiten 7, 7' verlaufenden Teilbereiche 8'' von dem längs der oberen ersten Seite 6 verlaufenden Teilbereich 8''' voneinander. Weitere Details gehen aus dem Ausschnitt B der Figur 4 hervor.

Die Figur 4 zeigt die Kreuzung 17 der beschichtungsfreien Linie 16 mit der oberen Sammelelektrode 11. Vorzugsweise ist diese Kreuzung 17 herstellbar, indem die obere Sammelelektrode 11 über die durch Laserablation vorgefertigte beschichtungsfreie Linie 16 durch Siebdruck gedruckt wird.

Die Figur 4 zeigt des Weiteren die bevorzugte Konfiguration des schwarzen Maskierungsstreifens 13 wie er auch in dem Bereich der unteren Sammelelektrode 11' und den Bereichen 8'', 15, 16 verwendet wird. Der Maskierungsstreifen 13 verdeckt die funktionalen Elemente in diesen Bereichen und schützt sie auch vor UV-Strahlung, die die funktionalen Elemente schädigen kann. Im Einzelnen umfasst der schwarze Maskierungsstreifen 13 einen optisch deckenden, opaken Teilbereichs 13', der an seinem Rand 13'' in den optisch partiell transparenten Teilbereich 13''', der selbst bis zum Rand 13'''' reicht, übergeht. Der optisch partiell transparente Teilbereich 13''' ist beispielsweise ein Punktraster. Vorzugsweise wird der Maskierungsstreifen 13 auf die Innenseite, d.h. der der Innenscheibe 3 zugekehrten Seite der Außenscheibe 2 durch Siebdruck aufgebracht und vor dem Zusammenfügen eingebrannt, bevor die beiden Scheiben 2 und 3 mit der Klebeschicht 4 verbunden werden.

**Figur 5 in Verbindung mit der Figur 1**

Die Figur 5 zeigt eine Draufsicht auf den detaillierten Ausschnitt A aus einer beispielhaften Ausgestaltung der Windschutzscheibe 1 gemäß der Figur 1.

Der Ausschnitt A gibt lediglich den linken Teilbereich der Beschichtung 8' im Bereich der Wischerparkzone bis zur Mittellinie und Spiegelachse M wieder. Der rechte Teilbereich der Beschichtung 8' ist ein Spiegelbild des linken Teilbereichs 8' und wird daher nicht wiedergegeben.

In dieser beispielhaften Ausgestaltung gemäß der Figur 5 geht die beschichtungsfreie Linie 16 in das System 16'' aus drei horizontalen beschichtungsfreien Linien und einer vertikalen beschichtungsfreien Linie einer Linienbreite von 30 $\mu$m über. In diesem System 16'' zweigen im linken Teilbereich 8' an drei Verzweigungspunkten 17'' drei horizontale, parallel zueinander angeordnete, beschichtungsfreie Linien ab. Die obere beschichtungsfreie Linie streift die oberen Enden 20 der vertikal angeordneten Zusatzelektrode 18 und des vertikal angeordneten Schenkels der Gegenelektrode/Verbindungsleiter 19. Die mittlere beschichtungsfreie Linie streift das untere Ende 20 der Zusatzelektrode und endet an ihrem Endpunkt 21 an dem vertikal angeordneten Schenkel der Gegenelektrode/Verbindungsleiter 19. Die untere beschichtungsfreie Linie verläuft von ihrem Verzweigungspunkt 17'' aus parallel zum unteren umlaufenden Beschichtungs-rand 10 längs der unteren ersten Seite 6' bis zur gedachten Mittellinie M und darüber hinaus.

Die obere beschichtungsfreie Linie verläuft nach dem oberen Ende 20 des vertikalen Schenkels der Gegenelektrode/Verbindungsleiter 19 vertikal nach unten und kreuzt den horizontalen Schenkel der Gegenelektrode/Verbindungsleiter 19 in der Kreuzung 17' und setzt sich unterhalb des horizontalen Schenkels bis zum Verzweigungspunkt 17'' der unteren beschichtungsfreien Linie fort.

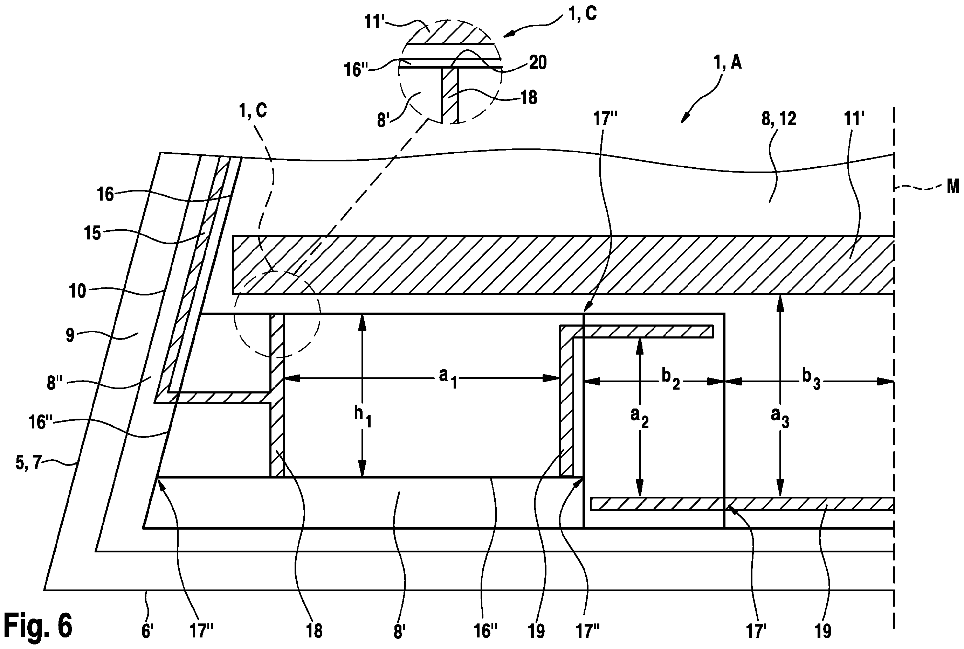

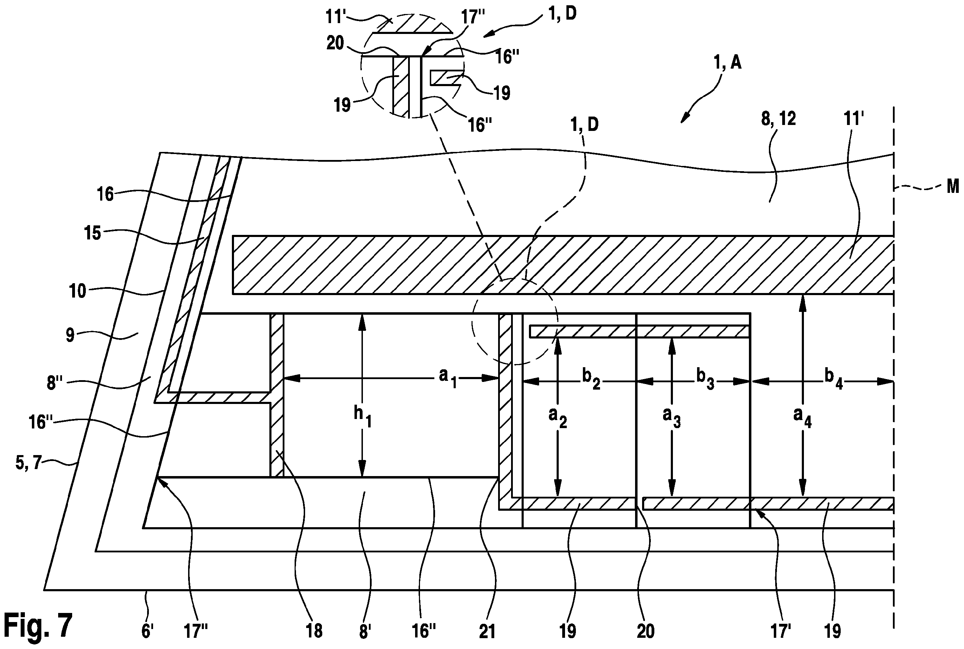

Details der Endpunkte 20 gehen aus dem vergrößerten Ausschnitt C in der Figur 6 hervor. Details der Verzweigungspunkte 17'' gehen aus dem vergrößerten Ausschnitt D der Figur 7 hervor.

Durch dieses System 16'' von vier beschichtungsfreien Linien werden zwei Strompfade $a_1$ und $a_2$ in dem Teilbereich 8' gebildet. Der Strompfad $a_1$ verläuft von der Zusatzelektrode 18 zu dem vertikalen Schenkel der Gegenelektrode/Verbindungsleiter 19; er ist somit in dieser Ausführungsform und den nachfolgend beschriebenen Ausführungsformen der erste Strompfad. Vom horizontalen Schenkel der Gegenelektrode/Verbindungsleiter 19 verläuft der Strompfad $a_2$ bis zur der unteren Sammelelektrode 11'. Das Verhältnis $VH_1$ = 0,9wir und n = 2. Beim Anlegen einer Speise-spannung von 12 V fließt in dem System 16'' der Heizstrom von der Zusatzelektrode 18 über die Gegenelektrode/Verbindungsleiter 19 zur unteren Sammelelektrode 11'.

Es ist ein ganz besonderer Vorteil des erfindungsgemäßen Systems 16'', 18, 19, dass dadurch die Beschichtung 8' gleichmäßig aufgeheizt wird, wobei die spezifische Heizleistung bei 400 bis 550 $W/m^2$ liegt. Ein weiterer ganz besonderer Vorteil des erfindungsgemäßen Systems16'', 18, 19 ist des Weiteren, dass die gesamte Konfiguration durch einfache Parallelverschiebung P beispielsweise der Zusatzelektrode 18 und/oder des vertikalen Schenkels der Gegenelektrode/Verbindungsleiter 19 den Erfordernissen des Einzelfalls angepasst werden kann, ohne dass sich die spezifische Heizleistung in nachteiliger Weise - beispielsweise durch das Auftreten von Hot-Spots und/oder Cold-Spots - ändert. Die für den Einzelfall optimale Konfiguration der Elektroden 18, 19 und der Strompfade $a_1 ... a_n$ kann in einfacher Weise mithilfe üblicher und bekannter Simulationsprogramme ermittelt werden.

Insgesamt verhindert die Ausführungsform der erfindungsgemäßen transparenten Scheibe 1 gemäß der Figur 5 auch bei besonders tiefen Temperaturen <0 °C effektiv, dass die Scheibenwischer in der Wischerparkzone festfrieren.

**Figur 6 in Verbindung mit der Figur 1**

Die Figur 6 zeigt eine Draufsicht auf den detaillierten Ausschnitt A aus einer beispielhaften Ausgestaltung der Windschutzscheibe 1 gemäß der Figur 1.

Wie in der Figur 5 gibt der Ausschnitt A lediglich den linken Teilbereich der Beschichtung 8' im Bereich der Wischerparkzone bis zur Mittellinie und Spiegelachse M wieder. Der rechte Teilbereich der Beschichtung 8' ist auch hier ein Spiegelbild des linken Teilbereichs 8' und braucht daher nicht wiedergegeben zu werden.

In dieser beispielhaften Ausgestaltung gemäß der Figur 6 geht die beschichtungsfreie Linie 16 in das System 16'' aus insgesamt drei horizontalen und zwei vertikalen beschichtungsfreien Linien einer Linienbreite von 30 $\mu$m über. In diesem System 16'' zweigen im linken Teilbereich 8' an den drei Verzweigungspunkten 17'' drei horizontale, parallel zueinander angeordnete beschichtungsfreie Linien ab. Die obere beschichtungsfreie Linie streift das obere Ende der Zusatzelektrode 18. Zu den Details wird auf den vergrößerten Ausschnitt C der Figur 6 verwiesen. Dann verläuft die beschichtungsfreie Linie längs des horizontalen Schenkels der zweigeteilten Gegenelektrode/Verbindungsleiter 19. In diesem Bereich zweigt eine vertikale Beschichtungslinie ab (Verzweigungspunkt 17''), die bis zu der unteren horizontalen beschichtungsfreien Linie verläuft. Die mittlere horizontale beschichtungsfreie Linie des Systems 16'' streift die unteren Enden der vertikalen Zusatzelektrode 18 und des vertikalen Schenkels der zweigeteilten Gegenelektrode/Verbindungsleiter 19 und verläuft bis zu dem Verzweigungspunkt 17'' mit der längs des vertikalen Schenkels der Gegenelektrode/Verbindungsleiter 19 angeordneten beschichtungsfreien Linie. Details betreffend die Verzweigungspunkte 17'' gehen aus dem Ausschnitt D der Figur 7 hervor.

Im Bereich des Endes des horizontalen Schenkels der zweigeteilten Gegenelektrode/Verbindungsleiter 19 verläuft die beschichtungsfreie Linie vertikal nach unten und kreuzt einen räumlich hiervon abgetrennten, aber mit dem horizontalen Schenkel elektrisch gekoppelten Teilbereich der Gegenelektrode/Verbindungsleiter 19. Der Kreuzungspunkt 17' hat die gleiche Konfiguration wie der Kreuzungspunkt 17 in der Figur 4. Der Teilbereich der Gegenelektrode/Verbindungsleiter 19 ist dann mit der unteren Sammelelektrode 11' elektrisch gekoppelt, nämlich über die elektrisch leitfähige Beschichtung elektrisch verbunden.

Durch dieses System 16'' von fünf beschichtungsfreien Linien werden drei Strompfade $a_1$, $a_2$ und $a_3$ gebildet. Der Strompfad $a_1$ verläuft von der Zusatzelektrode 18 zu dem vertikalen Schenkel der zweigeteilten Gegenelektrode/Verbindungsleiter 19. Von dem horizontalen Schenkel der Gegenelektrode/Verbindungsleiter 19 verläuft der Strompfad $a_2$ bis zu dem separaten horizontalen Teilbereich der Gegenelektrode/Verbindungsleiter 19. Der Strompfad $a_3$ verläuft von diesem separaten horizontalen Teilbereich von 19 zur unteren Sammelelektrode 11'.

Die Zusatzelektrode 18 ist direkt an die erste Sammelschiene 11 angeschlossen über die Stromversorgungsleitung 15. Im Gegensatz dazu ist die Gegenelektrode 19 nicht direkt an die zweite Sammel-schiene 11' angeschlossen. Die Gegenelektrode 19 ist ein Verbindungsleiter, welcher zwei Beschichtungssegmente, die durch die beschichtungsfreien Linien gebildet werden, miteinander verbindet, so dass ein Strom zwischen den Beschichtungssegmenten fließen kann.

Der Stromfluss sämtlicher Strompfade $a_1$-$a_n$ wird getrieben durch die Potentialdifferenz zwischen der Zusatzelektrode 18 (angeschlossen an die erste Sammelschiene 11) und der zweiten Stromsammelschiene 11'. Die durch die beschichtungsfreien Linien gebildete Segmentierung der leitfähigen Beschichtung sowie die Verbindung der Segmente mittels der Gegenelektrode(n) 19 dienen der Lenkung des Stromflusses in Form der Strompfade $a_1$-$a_n$.

Das Verhältnis $VH_1 = 1$, das Verhältnis $VH_2 = 1$ und n = 2 und 3. Beim Anlegen einer Speisespannung 12 V fließt in dem System 16" der Heizstrom von der Zusatzelektrode 18 über die Gegenelektrode/Verbindungsleiter 19 zur unteren Sammelelektrode 11'. Beim Anlegen einer Speise-spannung von 12 V fließt in dem System 16" der Strom von der Zusatzelektrode 18 über die zweigeteilte Gegenelektrode/Verbindungsleiter 19 zur unteren Sammelelektrode 11'.

Es ist ein ganz besonderer Vorteil auch dieses erfindungsgemäßen Systems 16", 18, 19, dass dadurch die Beschichtung 8' gleichmäßig aufgeheizt wird, wobei die spezifische Heizleistung bei 400 bis 550 W/m² liegt. Ein weiterer ganz besonderer Vorteil des erfindungsgemäßen Systems 16", 18, 19 ist des Weiteren, dass die gesamte Konfiguration durch einfache Parallelverschiebung P beispielsweise der Zusatzelektrode 18 und/oder des vertikalen Schenkels der Gegenelektrode/Verbindungsleiter 19 den Erfordernissen des Einzelfalls angepasst werden kann, ohne dass sich die spezifische Heizleistung in nachteiliger Weise - beispielsweise durch das Auftreten von Hot-Spots und/oder Cold-Spots - ändert. Die für den Einzelfall optimale Konfiguration der Elektroden 18, 19 und der Strompfade $a_1 \ldots a_n$ kann in einfacher Weise mithilfe üblicher und bekannter Simulationsprogramme ermittelt werden.

Insgesamt verhindert die Ausführungsform der erfindungsgemäßen transparenten Scheibe 1 gemäß der Figur 6 auch bei besonders tiefen Temperaturen <0 °C effektiv, dass die Scheibenwischer in der Wischerparkzone festfrieren.

**Figur 7 in Verbindung mit der Figur 1**

Die Figur 7 zeigt eine Draufsicht auf den detaillierten Ausschnitt A aus einer beispielhaften Ausgestaltung der Windschutzscheibe 1 gemäß der Figur 1.

Wie in den Figuren 5 und 6 gibt der Ausschnitt A lediglich den linken Teilbereich der Beschichtung 8' im Bereich der Wischerparkzone bis zur Mittellinie und Spiegelachse M wieder. Der rechte Teilbereich der Beschichtung 8' ist auch hier ein Spiegelbild des linken Teilbereichs 8' um braucht daher nicht wiedergegeben zu werden.

In dieser beispielhaften Ausgestaltung gemäß der Figur 7 geht die beschichtungsfreie Linie 16 in das System 16" aus insgesamt drei horizontalen und drei vertikalen beschichtungsfreien Linien einer Linienbreite von 30 µm über. In diesem System 16" zweigen im linken Teilbereich 8' an den drei Verzweigungspunkten 17" drei horizontale, parallel zueinander angeordnete beschichtungsfreie Linien ab. Hiervon streift die obere beschichtungsfreie Linie das obere Ende der vertikalen Zusatzelektrode 18 und das obere Ende des vertikalen Schenkels der dreiteiligen Zusatzelektrode 19. Danach verläuft die obere beschichtungsfreie Linie längs des räumlich separaten oberen Teilbereichs der dreigeteilten Gegenelektrode/Verbindungsleiter 19. Der obere Teilbereich ist mit dem unteren horizontalen Schenkel der dreigeteilten Gegen-elektrode und ihrem dritten räumlich separaten unteren Teilbereich elektrisch gekoppelt.

Hinter dem Endpunkt 20 befindet sich eine Verzweigung 17" bei der eine beschichtungsfreie Linie vertikal nach unten abzweigt und längs des vertikalen Schenkels der zwei dreigeteilten geteilten Gegenelektrode/Verbindungsleiter 19 verläuft (zu den Details vgl. den vergrößerten Ausschnitt D der Figur 7), sich mit dem unteren horizontalen Schenkel kreuzt und an der unteren horizontalen beschichtungsfreien Linie endet. Im weiteren Verlauf verzweigt sich die obere horizontale beschichtungsfreie Linie noch einmal, wobei die abgezweigte beschichtungsfreie Linie vertikal nach unten verläuft, den Endpunkt 20 des horizontalen unteren Schenkels streift, durch die Lücke zwischen dem Ende des horizontalen unteren Schenkels und dem dritten horizontalen Teilbereich der dreigeteilten Gegenelektrode/Verbindungsleiter 19 weiter verläuft und danach mit der unteren horizontalen beschichtungsfreien Linie zusammentrifft.

Die obere beschichtungsfreie Linie verläuft der längs des horizontalen oberen Teilbereichs der Gegenelektrode/Verbindungsleiter 19 und biegt danach vertikal nach unten ab, streift das Ende des horizontalen oberen Teilbereichs, kreuzt bei 17' den horizontalen, unteren, dritten Teilbereich der dreigeteilten Gegenelektrode/Verbindungsleiter 19 und trifft dann ebenfalls mit der unteren horizontalen beschichtungsfreie Linie zusammen.

Der horizontale, untere, dritte Teilbereich der dreigeteilten Gegenelektrode/Verbindungsleiter 19 verläuft dann weiter bis zur Mittellinie und Spiegelachse M.

Durch dieses System 16" von sechs beschichtungsfreien Linien werden 4 Strompfade $a_1$, $a_2$, $a_3$ und $a_4$ gebildet. Der Strompfad $a_1$ verläuft von der Zusatzelektrode 18 zu dem vertikalen Schenkel der dreigeteilten Gegenelektrode/Verbindungsleiter 19. Von dem horizontalen unteren Schenkel der Gegenelektrode 19 verläuft der Strompfad $a_2$ bis zu dem separaten horizontalen oberen Teilbereich der Gegenelektrode/Verbindungsleiter 19. Der Strompfad $a_3$ verläuft von diesem separaten horizontalen oberen Teilbereich von 19 zu dem horizontalen unteren Teilbereich der drei-geteilten Gegenelektrode/Verbindungsleiter 19. Von da aus läuft der Strompfad $a_4$ zur unteren Sammel-elektrode 11'.

Das Verhältnis $VH_1 = 1{,}5$ und n = 2 bis 4. Beim Anlegen einer Speisespannung von 12 V fließt in dem System 16" der Strom von der Zusatzelektrode 18 über die dreigeteilte Gegen-elektrode 19 zur unteren Sammelelektrode 11'.

Es ist ein ganz besonderer Vorteil auch dieses erfindungsgemäßen Systems 16", 18, 19, dass dadurch die Beschichtung 8' gleichmäßig aufgeheizt wird, wobei die spezifische Heizleistung bei 400 bis 550 W/m² liegt. Ein weiterer ganz besonderer Vorteil des erfindungsgemäßen Systems 16", 18, 19 ist des Weiteren, dass die gesamte Konfiguration durch einfache Parallelverschiebungen P beispielsweise der Zusatzelektrode 18 und/oder des vertikalen Schenkels der Gegenelektrode/Verbindungsleiter 19 den Erfordernissen des Einzelfalls angepasst werden kann, ohne dass sich die spezifische Heizleistung in nachteiliger Weise - beispiels-weise durch das Auftreten von Hot-Spots und/oder Cold-Spots - ändert. Die für den Einzel-fall optimale Konfiguration der Elektroden 18, 19 und der Strompfade $a_1$ ... $a_n$ kann in einfacher Weise mithilfe üblicher und bekannter Simulationsprogramme ermittelt werden.

Insgesamt verhindert die Ausführungsform der erfindungsgemäßen transparenten Scheibe 1 gemäß der Figur 7 auch bei besonders tiefen Temperaturen <0 °C effektiv, dass die Scheibenwischer in der Wischerparkzone festfrieren.

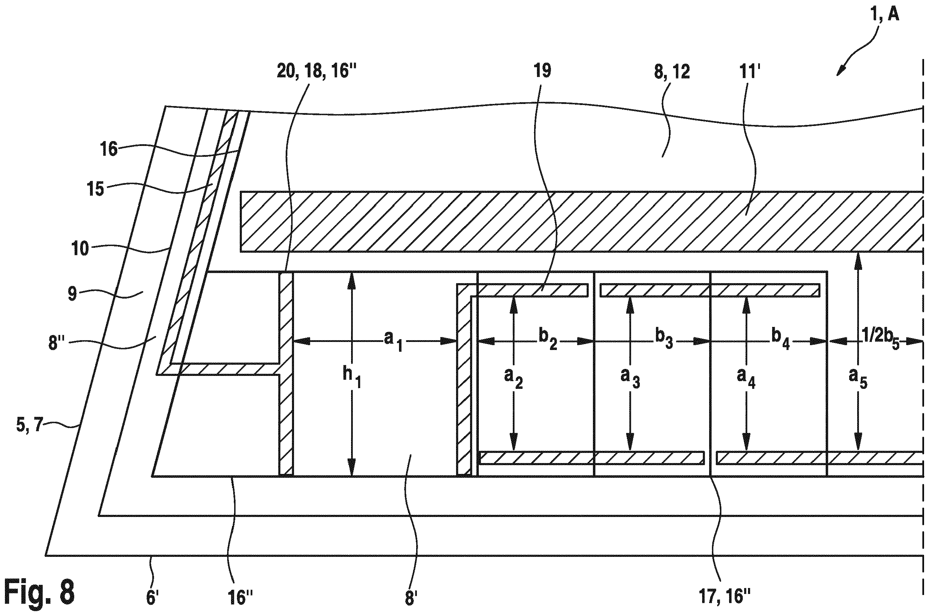

**Figur 8 in Verbindung mit der Figur 1**

Die Figur 8 zeigt eine Draufsicht auf den detaillierten Ausschnitt A aus einer beispielhaften Ausgestaltung der Windschutzscheibe 1 gemäß der Figur 1.

Wie in den Figuren 5, 6 und 7 gibt der Ausschnitt A lediglich den linken Teilbereich der Beschichtung 8' im Bereich der Wischerparkzone bis zur Mittellinie und Spiegelachse M wieder. Der rechte Teilbereich der Beschichtung 8' ist auch hier ein Spiegelbild des linken Teilbereichs 8' und braucht daher nicht wiedergegeben zu werden.

Die Ausgestaltung der Windschutzscheibe 1 gemäß der Figur 8 ist eine Weiterentwicklung der Ausgestaltung der Windschutzscheibe 1 gemäß der Figur 6. Der Unterschied beruht darin, dass in der Ausgestaltung gemäß der Figur 8 die Beschichtung 8' im Bereich der Wischerparkzone durch zwei horizontale und zehn vertikale beschichtungsfreie Linien in zehn Strompfade $a_1$-$a_{10}$ und nicht durch drei horizontale und drei vertikale beschichtungsfreie Linien in drei Strompfade $a_1$-$a_3$ unterteilt ist.

Das Verhältnis $VH_1$ = 1,5 und n = 2 bis 5. Beim Anlegen einer Speisespannung von 12 V fließt in dem System 16" der Strom von der Zusatzelektrode 18 über die vierfach geteilte Gegenelektrode/Verbindungsleiter 19 zur unteren Sammelelektrode 11'.

Es ist ein ganz besonderer Vorteil auch dieses erfindungsgemäßen Systems 16", 18, 19, dass dadurch die Beschichtung 8' besonders gleichmäßig aufgeheizt wird, wobei die spezifische Heizleistung bei 500 bis 700 bis 0 W/m$^2$ liegt. Ein weiterer ganz besonderer Vorteil des erfindungsgemäßen Systems 16", 18, 19 ist, dass die gesamte Konfiguration durch einfache Parallelverschiebungen P beispielsweise der Zusatzelektrode 18 und/oder des vertikalen Schenkels der Gegenelektrode/Verbindungsleiter 19 den Erfordernissen des Einzelfalls angepasst werden kann, ohne dass sich die spezifische Heizleistung in nachteiliger Weise - beispielsweise durch das Auftreten von Hot-Spots und/oder Cold-Spots - ändert. Die für den Einzelfall optimale Konfiguration der Elektroden 18, 19 und der Strompfade $a_1$ ... $a_n$ kann in einfacher Weise mithilfe üblicher und bekannter Simulationsprogramme ermittelt werden.

Insgesamt verhindert die Ausführungsform der erfindungsgemäßen transparenten Scheibe 1 gemäß der Figur 7 auch bei besonders tiefen Temperaturen <0 °C besonders effektiv, dass die Scheibenwischer in der Wischerparkzone festfrieren.

In den Figuren 1 bis 8 haben die Bezugszeichen die folgende Bedeutung:

| | |
|---|---|
| 1 | Windschutzscheibe |
| 2 | Außenscheibe |
| 3 | Innenscheibe |
| 4 | Klebeschicht |
| 5 | umlaufender Scheibenrand |
| 6, | im eingebauten Zustand der Windschutzscheibe 1 obere erste Seite des Scheibenrands 5 |
| 6' | im eingebauten Zustand der Windschutzscheibe 1 untere erste Seite des Scheibenrands 5 |
| 7, 7' | im eingebauten Zustand der Windschutzscheibe 1 seitliche zweite Seiten des Scheibenrands 5 |
| 8 | elektrisch leitfähige Beschichtung |
| 8' | im eingebauten Zustand der Windschutzscheibe 1 außerhalb des Heizfelds 12 längs der unteren ersten Seite 6' des Scheibenrands 5 angeordnete untere elektrisch leitfähige Beschichtung 8 im Bereich der Wischerparkzone |
| 8" | im eingebauten Zustand der Windschutzscheibe 1 außerhalb des Heizfelds 12 längs der zweiten Seiten 7 und 7' des Scheibenrands 5, angeordnete Teilbereiche der elektrisch leitfähigen Beschichtung 8 |
| 8''' | im eingebauten Zustand der Windschutzscheibe 1 außerhalb des Heizfelds 12 längs der oberen ersten Seite 6 des Scheibenrands 5 angeordneter Teilbereich der elektrisch leitfähigen Beschichtung 8 |
| 9 | umlaufender, von der elektrisch leitfähigen Beschichtung 8 freier Randstreifen |
| 10 | umlaufender Beschichtungsrand |
| 11, | im eingebauten Zustand der Windschutzscheibe 1 obere Sammelelektrode |
| 11' | im eingebauten Zustand der Windschutzscheibe 1 untere Sammelelektrode |
| 12 | Heizfeld |
| 13 | Maskierungsstreifen |
| 13' | optisch deckender, opaker Teilbereich des Markierungsstreifens 13 |
| 13" | Rand des optisch deckenden, opaken Teilbereichs des Markierungsstreifens 13 |
| 13''' | optisch partiell transparenter Teilbereich des Maskierungsstreifen 13 |

| 13'''' | Rand des optisch partiell transparenten Teilbereichs des Maskierungsstreifen 13 |
|---|---|
| 14 | von der elektrisch leitfähigen Beschichtung 8 freie Kommunikationsfenster |
| 15, 15' | von der oberen Sammelelektrode 11 längs des jeweiligen zugeordneten Beschichtungsrands 10 in den jeweiligen zugeordneten Teilbereichen 8" zu den Zusatzelektroden 18, 18' verlaufende Stromversorgungsleitungen |
| 16, 16' | längs der Stromversorgungsleitungen 15, 15' auf der Seite des Heizfelds 12 verlaufende beschichtungsfreie Linie |
| 16" | System von mindestens vier beschichtungsfreien Linien in der Beschichtung 8' im Bereich der Wischerparkzone |
| 17 | Kreuzung der beschichtungsfreien Linien 16, 16' mit der Sammelelektrode 11 |
| 17' | Kreuzung eine beschichtungsfreien Linie 16" mit einer Gegenelektrode 19 |
| 17" | Verzweigungspunkt einer beschichtungsfreien Linie 16" |
| 18, 18' | in der unteren elektrisch leitfähigen Beschichtung 8' (Wischerparkzone) angeordnete, über Stromversorgungsleitungen 15, 15' mit der Sammelelektrode 11 elektrisch verbundene Zusatzelektroden |
| 19 | Gegenelektrode zur Zusatzelektrode 18 (Verbindungsleiter) |
| 20 | Endpunkt einer Zusatzelektrode 18 oder einer Gegenelektrode 19 an einer beschichtungsfreien Linie 16" |
| 21 | Endpunkt einer beschichtungsfreien Linie 16" an einer Zusatzelektrode 18 oder einer Gegenelektrode 19 |
| $a_1$ | Länge des Strompfads von der Zusatzelektrode 18 bis zum nächstgelegenen, gegenüberliegenden Abschnitt der Gegenelektrode 19 |
| $a_2, ..., a_n$ | Länge eines Strompfads |
| $h_1$ | Höhe des Strompfads $a_1$ |
| $b_2, ... b_n$ | Breite der Strompfade $a_2$ bis $a_n$ |
| $1/2b_6$ | Hälfte der Breite $b_6$ |
| A | vergrößerter Ausschnitt aus der Windschutzscheibe 1 |
| B | vergrößerter Ausschnitt aus der Windschutzscheibe 1 |
| C | vergrößerter Ausschnitt aus der Windschutzscheibe 1 |
| D | vergrößerter Ausschnitt aus der Windschutzscheibe 1 |
| M | vertikale Mittellinie und Spiegelachse |
| P | Parallelverschiebung |

**Patentansprüche**

1. Transparente Scheibe (1) mit mindestens einer heizbaren, elektrisch leitfähigen Beschichtung (8), die mit mindestens zwei zum elektrischen Verbinden mit den beiden Polen einer Spannungsquelle vorgesehenen Sammelelektroden (11, 11') so verbunden ist, dass durch Anlegen einer Speisespannung ein Heizstrom über ein zwischen den mindestens zwei Sammelelektroden gebildetes Heizfeld (12) fließt, wobei

- das Heizfeld (12) zumindest ein von der heizbaren, elektrisch leitfähigen Beschichtung (8) freies Kommunikationsfenster (14) aufweist,
- die heizbare, elektrisch leitfähigen Beschichtung (8) von einem umlaufenden Beschichtungsrand (10) und einem umlaufenden, von der elektrisch leitfähigen Beschichtung (8) freien Randstreifen (9), der sich bis zum umlaufenden Scheibenrand (5) erstreckt, begrenzt wird,
wobei die transparente Scheibe (1)
- außerhalb des Heizfelds (12) und hiervon durch eine Sammelelektrode (11 oder 11') räumlich getrennt längs einer ersten Seite (6 oder 6') des Scheibenrands (5) mindestens eine heizbare, elektrisch leitfähige Beschichtung (8' oder 8''') aufweist,
- worin im Bereich der beiden zweiten Seiten (7, 7') des Scheibenrands (5) jeweils mindestens eine Zusatzelektrode (18, 18') angeordnet ist,
- die über jeweils mindestens eine Stromversorgungsleitung (15, 15') mit einer Sammelelektrode (11 oder 11') verbunden ist,
- die längs des jeweiligen zugeordneten Beschichtungsrands (10) und längs der beiden zweiten Seiten (7, 7') des Scheibenrands (5) zumindest abschnittsweise

    - im zugeordneten Randstreifen (9),
    - auf dem zugeordneten Teilstück des umlaufenden Beschichtungsrands (10) durch jeweils mindestens eine zugeordnete beschichtungsfreie Linie (16 oder 16') von dem Heizfeld (12) elektrisch entkoppelt und/oder

- in und/oder auf der jeweils zugeordneten elektrisch leitfähigen Beschichtung (8") außerhalb des Heizfelds (12) durch jeweils mindestens eine zugeordnete beschichtungsfreie Linie (16 oder 16') von dem Heizfeld (12) elektrisch entkoppelt verläuft, und

- in der elektrisch leitfähigen Beschichtung (8' oder 8''')

- mindestens ein der jeweiligen mindestens einen Zusatzelektrode (18, 18') elektrisch zugeordneter, mit der Sammelelektrode (11 oder 11') entgegengesetzter Polarität über die elektrisch leitfähige Beschichtung (8' oder 8''') elektrisch verbundener Verbindungsleiter (19) enthält,
**dadurch gekennzeichnet, dass** die Transparente Scheibe in der elektrisch leitfähigen Beschichtung (8' oder 8''')
- mindestens zwei bezüglich der vertikalen Mittellinie und Spiegelachse (M) der transparenten Scheibe (1) spiegelbildlich einander gegenüber liegende Systeme (16") von jeweils mindestens vier beschichtungsfreien Linien enthält, die derart angeordnet sind, dass sie den bei Anlegen einer Speisespannung von den mindestens zwei Zusatzelektroden (18, 18') fließenden Heizstrom über jeweils mindestens zwei Strompfade $(a_1; a_2$ bis $a_n)$ über die mindestens zwei ihnen jeweils zugeordneten Verbindungsleiter (19) zu der mindestens einen Sammelelektrode (11 oder 11') jeweils entgegengesetzter Polarität lenken,
- wobei für die Strompfade $(a_1; a_2$ bis $a_n)$ in einem System (16") die Gleichung I gilt:

$$VH_1 = h_1 : b_n = 0,5 \text{ bis } 2,0 \qquad (I),$$

wobei

$n$ für eine ganze Zahl von 2 bis 30 steht,
$(a_1)$ der Strompfad von der Zusatzelektrode (18) bis zum nächstgelegenen gegenüberliegenden Abschnitt des Verbindungsleiters (19) bezeichnet,
$(h_1)$ für die Höhe des Strompfads $a_1$ steht
$(a_2...a_n)$ die weiteren Strompfade bezeichnet,
$b_n$ für die Breite eines weiteren Strompfads $a_n$ steht und
$(VH_1)$ für das mathematische Verhältnis $(h_1 : bn)$ steht.

2. Transparente Scheibe (1) nach Anspruch 1, **dadurch gekennzeichnet, dass** die Zusatzelektroden (18, 18'), die ihnen zugeordneten Verbindungsleiter (19), das System beschichtungsfreier Linien (16") und die Strompfade $(a_1; a_2$ bis $a_n)$ bezüglich der vertikalen Mittellinie und Spiegelachse (M) der transparenten Scheibe (1) spiegelbildlich angeordnet sind.

3. Transparente Scheibe (1) nach Anspruch 1 oder 2, **dadurch gekennzeichnet, dass** $VH_1 = 0,75$ bis 1,5.

4. Transparente Scheibe (1) nach einem der Ansprüche 1 bis 3, **dadurch gekennzeichnet, dass** $VH_1 = 0,8$ bis 1,2.

5. Transparente Scheibe (1) nach einem der Ansprüche 1 bis 4, **dadurch gekennzeichnet, dass** mindestens eine der beschichtungsfreien Linien (16, 16', 16") zumindest abschnittsweise geradlinig, wellenförmig, mäanderförmig, sägezahnförmig und/oder zickzackförmig verläuft.

6. Transparente Scheibe (1) nach einem der Ansprüche 1 bis 5, **dadurch gekennzeichnet, dass** mindestens eine der beschichtungsfreien Linien (16, 16', 16") zumindest abschnittsweise durchgehend und/oder als unterbrochene Linie diskreter Einschnitte verläuft.

7. Transparente Scheibe (1) nach einem der Ansprüche 1 bis 6, **dadurch gekennzeichnet, dass** mindestens eine der beschichtungsfreien Linien (16, 16', 16") durch Laserablation der elektrisch leitfähigen Beschichtung (8) des Heizfelds (12) und/oder der elektrischen leitfähigen Beschichtung (8' oder 8''') hergestellt ist.

8. Transparente Scheibe (1) nach einem der Ansprüche 1 bis 7, **dadurch gekennzeichnet, dass** im eingebauten Zustand der transparenten Scheibe (1) die elektrisch leitfähige Beschichtung (8') längs der unteren ersten Seite (6') des Scheibenrands (5) und die elektrisch leitfähige Beschichtung (8''') längs der oberen ersten Seite (6) des Scheibenrands (5) angeordnet sind.

9. Transparente Scheibe (1) nach Anspruch 8, **dadurch gekennzeichnet, dass** die elektrisch leitfähige Beschichtung (8'oder 8''') im Bereich der unteren und/oder der oberen Wischerparkzone angeordnet ist.

10. Transparente Scheibe (1) nach einem der Ansprüche 1 bis 9, **dadurch gekennzeichnet, dass** die beschichtungsfreien Linien (16, 16', 16") eine Breite von 10 $\mu$m bis 1 mm haben.

11. Transparente Scheibe (1) nach einem der Ansprüche 1 bis 10, **dadurch gekennzeichnet, dass** mindestens eine der beiden Sammelelektroden (11, 11') in mindestens zwei räumlich voneinander getrennte Teilbereiche untergliedert ist.

12. Verfahren zur Herstellung einer transparenten Scheibe (1) gemäß einem der Ansprüche 1 bis 11, umfassend die folgenden Verfahrensschritte:

(A) Herstellen einer elektrisch leitfähigen Beschichtung (8);
(B) Herstellen mindestens eines beschichtungsfreien Kommunikationsfensters (14) in der elektrisch leitfähigen Beschichtung (8) des Heizfelds (12);
(C) Ausbilden von

(c1) mindestens zwei mit den beiden Polen einer Spannungsquelle verbundenen Sammelelektroden (11, 11'), die mit der elektrisch leitfähigen Beschichtung (8) elektrisch verbunden sind, so dass durch Anlegen einer Speisespannung ein Heizstrom über ein zwischen den beiden Sammelelektroden (11, 11') befindliches Heizfeld (12) fließt, und/oder
(c2) mindestens zwei mit den beiden Polen einer Spannungsquelle verbundenen Sammelelektroden (11, 11'), die mit der elektrisch leitfähigen Beschichtung (8) elektrisch verbunden sind, wobei mindestens eine der beiden Sammelelektroden (11, 11') in mindestens zwei voneinander räumlich getrennte Teilbereiche untergliedert ausgeführt wird;

(D) Herstellen von

(d1) mindestens zwei bezüglich der Mittellinie und Spiegelachse (M) der transparenten Scheibe (1) spiegelbildlich einander gegenüberliegenden Zusatzelektroden (18, 18');
(d2) mindestens zwei bezüglich der Mittellinie und Spiegelachse (M) der transparenten Scheibe (1) spiegelbildlich einander gegenüberliegenden und den Zusatzelektroden (18, 18') elektrisch zugeordneten Verbindungsleitern (19), die bei Anlegen einer Speisespannung mit der Sammelelektrode (11 oder 11') entgegengesetzter Polarität über die elektrisch leitfähige Beschichtung (8) elektrisch verbunden sind;
(d3) mindestens zwei bezüglich der Mittellinie und Spiegelachse (M) der transparenten Scheibe (1) spiegelbildlich zueinander angeordnete, jeweils mindestens eine Zusatzelektrode (18, 18') mit jeweils mindestens einer Sammelelektrode (11, 11') oder jeweils mindestens einem ihrer Teilbereiche verbindenden Stromversorgungsleitungen (15, 15'), die längs des jeweiligen zugeordneten Beschichtungsrands (10) und längs der beiden zweiten Seiten (7, 7') des Scheibenrands (5) zumindest abschnittsweise

- im jeweils zugeordneten Randstreifen (9),
- auf dem zugeordneten Teilstück des umlaufenden Beschichtungsrands (10) durch jeweils mindestens eine zugeordnete beschichtungsfreie Linie (16, 16') von dem Heizfeld (12) elektrisch entkoppelt und/oder
- in der jeweils zugeordneten elektrischen Beschichtung (8") außerhalb des Heizfelds (12) durch jeweils mindestens eine zugeordnete beschichtungsfreie Linie (16,16') elektrisch entkoppelt

verlaufen;

(E) Ausbilden von

(e1) mindestens zwei längs der Stromversorgungsleitungen (15, 15') auf der Seite des Heizfelds 12 verlaufende beschichtungsfreie Linien (16, 16') sowie
(e2) mindestens zwei spiegelbildlich bezüglich der vertikalen Mittellinie und Spiegelachse (M) der transparenten Scheibe (1) einander gegenüber liegenden Systemen (16") von jeweils mindestens vier beschichtungsfreien Linien, die derart angeordnet werden, dass sie bei Anlegen einer Speisespannung den von den mindestens zwei Zusatzelektroden (18, 18') fließenden Heizstrom über mindestens zwei Strompfade

EP 3 178 294 B1

(a$_1$; a$_2$ bis a$_n$) und über die mindestens zwei ihnen jeweils zugeordneten Verbindungsleiter (19) zu der mindestens einen Sammelelektrode (11, 11') jeweils entgegengesetzter Polarität lenken, wobei für die Strompfade (a$_1$; a$_2$ bis a$_n$) in einem System (16") die Gleichung I gilt:

$$VH_1 = h_1 : b_n = 0,5 \text{ bis } 2,0 \qquad (I),$$

wobei

n für eine ganze Zahl von 2 bis 30 steht,
(a$_1$) den Strompfad von der Zusatzelektrode (18) bis zum nächstgelegenen gegenüberliegenden Abschnitt des Verbindungsleiters (19) bezeichnet,
(h$_1$) für die Höhe des Strompfads a$_1$ steht
(a$_2$...a$_n$) die weiteren Strompfade bezeichnet,
b$_n$ für die Breite eines weiteren Strompfads a$_n$ steht und
(VH$_1$) für das mathematische Verhältnis (h$_1$:bn) steht;

(F) wobei die Verfahrensschritte (B) und (E) nacheinander oder gleichzeitig durchgeführt werden und
(G) die Verfahrensschritte (C) und (D) gleichzeitig oder nacheinander sowie vor oder nach den Verfahrensschritten (B) und (E) durchgeführt werden.

13. Verfahren nach Anspruch 12, **dadurch gekennzeichnet, dass** VH1 = 0,75 bis 1,5.

14. Verfahren nach Anspruch 12 oder 13, **dadurch gekennzeichnet, dass**

- die mindestens zwei beschichtungsfreien Linien (16, 16') sowie die mindestens zwei Systeme (16") durch Laserablation der elektrisch leitfähigen Beschichtung (8) innerhalb und außerhalb des Heizfelds (12) hergestellt werden und
- die Verfahrensschritte (C) und (D) mithilfe des Siebdrucks durchgeführt werden.

15. Verwendung der transparenten Scheibe (1) gemäß einem der Ansprüche 1 bis 11 und der nach dem Verfahren gemäß einem der Ansprüche 13 bis 14 hergestellten transparenten Scheibe (1) als funktionales und/oder dekoratives Einzelstück und als Einbauteil in Möbeln, Geräten, Gebäuden und Fortbewegungsmitteln.

**Claims**

1. Transparent pane (1) with at least one heatable, electrically conductive coating (8), which is connected to at least two collection electrodes (11, 11') provided for electrically connecting to the two poles of a voltage source such that upon application of a supply voltage, a heating current flows via a heating field (12) formed between the at least two collection electrodes, wherein

- the heating field (12) has at least one communication window (14) free of the heatable, electrically conductive coating (8),
- the heatable, electrically conductive coating (8) is bounded by a peripheral coating edge (10) and a peripheral edge strip (9) free of the electrically conductive coating (8), which strip extends all the way to the peripheral pane edge (5),

wherein the transparent pane (1)

- has, outside the heating field (12) and spatially separated therefrom by a collection electrode (11 or 11') along a first side (6 or 6') of the pane edge (5), at least one heatable, electrically conductive coating (8' or 8'''),
- wherein, in the region of each of the two second sides (7, 7') of the pane edge (5), at least one additional electrode (18, 18') is arranged,
- which is connected to a collection electrode (11 or 11') via at least one power supply line (15, 15') in each case,
- which runs along the respective associated coating edge (10) and along the two second sides (7, 7') of the pane edge (5) at least in sections

- in the associated edge strip (9),
- on the associated subsection of the peripheral coating edge (10) electrically decoupled from the heating field (12) by, in each case, at least one associated coating free line (16 or 16'), and/or
- in and/or on the, in each case, associated electrically conductive coating (8") outside the heating field (12) electrically decoupled from the heating field (12) by, in each case, at least one associated coating free line (16 or 16'),

and the transparent pane contains
- in the electrically conductive coating (8' or 8''')

- at least one connection conductor (19) electrically associated with the respective at least one additional electrode (18, 18') and electrically connected to the collection electrode (11 or 11') of opposite polarity via the electrically conductive coating (8' or 8''')

**characterized in that** the transparent pane contains in the electrically conductive coating (8' or 8''')

- at least two systems (16") of at least four coating-free lines in each case positioned opposite one another as a mirror image relative to the vertical centerline and axis of symmetry (M) of the transparent pane (1), which are arranged such that they direct the heating current flowing upon application of a supply voltage from the at least two additional electrodes (18, 18') via at least two current paths ($a_1$, $a_2$ to $a_n$) in each case via the at least two connection conductors (19) associated therewith to the at least one collection electrode (11 or 11') of opposite polarity in each case,
- wherein the equation I applies for the current paths ($a_1$, $a_2$ to $a_n$) in a system (16"):

$$VH_1 = h_1 : b_n = 0.5 \text{ to } 2.0 \qquad (I),$$

where

n represents a whole number from 2 to 30,
($a_1$) designates the current path from the additional electrode (18) all the way to the nearest opposing section of the connection conductor (19),
($h_1$) represents the height of the current path $a_1$
($a_2$...$a_n$) designates the other current paths,
$b_n$ represents the width of another current path $a_n$, and
($VH_1$) represents the mathematical relationship ($h_1$:bn).

2. Transparent pane (1) according to claim 1, **characterized in that** the additional electrodes (18, 18'), the connection conductors (19) associated therewith, the system of coating-free lines (16"), and the current paths ($a_1$, $a_2$ to $a_n$) are arranged as a mirror image relative to the vertical centerline and axis of symmetry (M) of the transparent pane (1).

3. Transparent pane (1) according to claim 1 or 2, **characterized in that** $VH_1$ = 0.75 to 1.5.

4. Transparent pane (1) according to one of claims 1 through 3, **characterized in that** $VH_1$ = 0.8 to 1.2.

5. Transparent pane (1) according to one of claims 1 through 4, **characterized in that** at least one of the coating-free lines (16, 16', 16") runs, at least in sections, rectilinearly, wave-shaped, meander-shaped, sawtooth-shaped, and/or zigzag-shaped.

6. Transparent pane (1) according to one of claims 1 through 5, **characterized in that** at least one of the coating-free lines (16, 16', 16") runs, at least in sections, continuously and/or or as a broken line of discrete cuts.

7. Transparent pane (1) according to one of claims 1 through 6, **characterized in that** at least one of the coating-free lines (16, 16', 16") is produced by laser ablation of the electrically conductive coating (8) of the heating field (12) and/or of the electrically conductive coating (8' or 8''').

8. Transparent pane (1) according to one of claims 1 through 7, **characterized in that** in the installed state of the transparent pane (1), the electrically conductive coating (8') is arranged along the lower first side (6') of the pane edge (5) and the electrically conductive coating (8'") is arranged along the upper first side (6) of the pane edge (5).

9. Transparent pane (1) according to claim 8, **characterized in that** the electrically conductive coating (8' or 8'") is arranged in the region of the lower and/or of the upper wiper parking zone.

10. Transparent pane (1) according to one of claims 1 through 9, **characterized in that** the coating-free lines (16, 16', 16") have a width of 10 $\mu$m to 1 mm.

11. Transparent pane (1) according to one of claims 1 through 10, **characterized in that** at least one of the two collection electrodes (11, 11') is divided into at least two subregions spatially separated from one another.

12. Method for producing a transparent pane (1) according to one of claims 1 to 11, comprising the following process steps:

    (A) Producing an electrically conductive coating (8);
    (B) Producing at least one coating-free communication window (14) in the electrically conductive coating (8) of the heating field (12);
    (C) Forming

        (c1) at least two collection electrodes (11, 11') connected to the two poles of a voltage source, which electrodes are electrically connected to the electrically conductive coating (8) such that by application of a supply voltage, a heating current flows via a heating field (12) situated between the two collection electrodes (11, 11'), and/or
        (c2) at least two collection electrodes (11, 11') connected to the two poles of a voltage source, which electrodes are electrically connected to the electrically conductive coating (8), wherein at least one of the two collection electrodes (11, 11") is implemented divided into at least two subregions spatially separated from one another;

    (D) Producing

        (d1) at least two additional electrodes (18, 18') opposite one another as a mirror image relative to the centerline and axis of symmetry (M) of the transparent pane (1);
        (d2) at least two connection conductors (19) as a mirror image opposite one another relative to the centerline and axis of symmetry (M) of the transparent pane (1) and electrically associated with the additional electrodes (18, 18'), which are electrically connected upon application of a supply voltage to the collection electrode (11 or 11') of opposite polarity via the electrically conductive coating (8);
        (d3) at least two power supply lines (15, 15') arranged as a mirror image of each other relative to the centerline and axis of symmetry (M) of the transparent pane (1) connecting in each case at least one additional electrode (18, 18') in each case to at least one collection electrode (11, 11') or in each case to at least one of their subregions which run along the respective associated coating edge (10) and along the two second sides (7, 7') of the pane edge (5), at least in sections

            - in the associated edge strip (9) in each case,
            - on the associated subsection of the peripheral coating edge (10) electrically decoupled from the heating field (12) by at least one associated coating-free line (16, 16') in each case, and/or
            - in the associated electrical coating (8") in each case outside the heating field (12) electrically decoupled by at least one associated coating-free line (16,16') in each case;

    (E) Forming

        (e1) at least two coating-free lines (16, 16') running along the power supply lines (15, 15') on the side of the heating field 12 as well as
        (e2) at least two systems (16") of at least four coating-free lines in each case positioned opposite one another as a mirror image with respect to the vertical centerline and axis of symmetry (M) of the transparent pane (1), which are arranged such that they, upon application of a supply voltage, direct the heating current flowing from the at least two additional electrodes (18, 18') via at least two current paths ($a_1$, $a_2$ to $a_n$) and via the at least two connection conductors (19) associated therewith in each case and the at least one connection conductor (19') to the at least one collection electrode (11, 11') of opposite polarity in each case,

wherein the equation I applies for the current paths ($a_1$, $a_2$ to $a_n$) in a system (16"):

$$VH_1 = h_1 : b_n = 0.5 \text{ to } 2.0 \qquad (I),$$

where

n represents a whole number from 2 to 30,
($a_1$) designates the current path from the additional electrode (18) all the way to the nearest opposing section of the connection conductor (19),
($h_1$) represents the height of the current path $a_1$
($a_2...a_n$) designates the other current paths,
$b_n$ represents the width of another current path $a_n$, and
($VH_1$) represents the mathematical relationship (hi:bn);

(F) wherein the process steps (B) and (E) are performed one after the other or simultaneously, and
(G) the process steps (C) and (D) are performed simultaneously or one after the other as well as before or after the process steps (B) and (E).

**13.** Method according to claim 12, **characterized in that** VH1 = 0.75 to 1.5.

**14.** Method according to claim 12 or 13, **characterized in that**

- the at least two coating-free lines (16, 16') as well as the at least two systems (16") are produced by laser ablation of the electrically conductive coating (8) inside and outside the heating field (12), and
- the process steps (C) and (D) are performed using screen printing.

**15.** Use of the transparent pane (1) according to one of claims 1 through 11 and the transparent pane (1) produced in accordance with the method according to one of claims 13 through 14 as a functional and/or decorative single piece and as an assembly part in furniture, appliances, buildings, and means of transportation.

**Revendications**

**1.** Vitre transparente (1) avec au moins un revêtement chauffant, conducteur d'électricité (8), qui est relié a au moins deux électrodes collectrices (11, 11') fournies pour le raccordement électrique avec les deux pôles d'une source de tension, de telle manière que par l'application d'une tension d'alimentation, un courant de chauffage circule par une zone chauffante (12) formée entre lesdites au moins deux électrodes collectrices,
où

- la zone chauffante (12) présente au moins une fenêtre de communication (14) dépourvue du revêtement chauffant et conducteur d'électricité (8),
- le revêtement chauffant, conducteur d'électricité (8) est délimité par un bord de revêtement (10) circonférentielle et une bande latérale (9) dépourvue du revêtement conducteur d'électricité (8), qui s'étend jusqu'au bord circonférentiel de la vitre (5), où la vitre transparente (1)
- présente en dehors de la zone chauffante (12) et séparée de celle-ci par une électrode collectrice (11 ou 11'), le long d'une première face (6 ou 6') du bord de la vitre (5), au moins un revêtement chauffant, conducteur d'électricité (8' ou 8''')
- dans lequel au moins une électrode additionnelle (18, 18') est disposée respectivement dans la zone des deux deuxièmes faces (7, 7') du bord de la vitre (5),
- qui est reliée à une électrode collectrice (11 ou 11') par au moins une ligne d'alimentation électrique (15, 15'),
- qui s'étend au moins partiellement le long du bord de revêtement (10) respectif associé et le long des deux deuxièmes faces (7, 7') du bord de la vitre (5)

- dans la bande latérale (9) associée,
- sur la portion associée du bord de revêtement (10) circonférentiel électriquement découplée de la zone chauffante (12) par au moins une ligne (16 ou 16') sans revêtement respective associée,
- électriquement découplée de la zone chauffante 12) dans et/ou sur le revêtement conducteur d'électricité respectif associé (8") en dehors de la zone chauffante (12) par au moins une ligne dépourvue de revêtement associé (16 ou 16') de la boîte de chauffage (12),

et la vitre transparente contient
- dans le revêtement conducteur d'électricité (8' ou 8''')

- au moins un conducteur de liaison (19) relié électriquement par le revêtement conducteur d'électricité (8' ou 8") à l'électrode collectrice (11 ou 11') de polarité opposée, associée électriquement à ladite au moins une électrode additionnelle (18 et 18') respective,

**caractérisée en ce que** la vitre transparente contient dans le revêtement conducteur d'électricité (8' ou 8")
- au moins deux systèmes (16") respectivement d'au moins quatre lignes sans revêtement, se trouvant l'un en face de l'autre en symétrie spéculaire par rapport à la ligne verticale centrale et l'axe renversée (M) de la vitre transparente (1), qui sont disposés de telle manière que, lors de l'application d'une tension, ils dirigent le courant de chauffage circulant en provenance desdites au moins deux électrodes additionnelles (18, 18'), par au moins deux parcours de courant respectives ($a_1$ et $a_2 + a_n$) par lesdites au moins deux conducteurs de liaison (19) qui leur sont associées respectivement, vers ladite au moins une électrode collectrice (11 ou 11') respectivement de polarité opposée,
- ou où l'équation I est appliquée pour les parcours de courant ($a_1$ et $a_2 + a_n$) dans un système (16"):

$$VH_1 = h_1 : b_n = 0,5 \text{ à } 2,0 \qquad (I),$$

où

n représente un nombre entier entre 2 et 30,
($a_1$) désigne le parcours de courant de l'électrode additionnelle (18) à la section opposée du conducteur de liaison (19) le plus proche,
($h_1$) représente la hauteur du parcours de courant $a_1$
($a_2... a_n$) désigne les autres parcours de courant,
$b_n$ représente la largeur d'un autre parcours de courant $a_n$ et
($VH_1$) représente le ratio mathématique ($h_1 : b_n$).

2. Vitre transparente (1) selon la revendication 1, **caractérisée en ce que** les électrodes additionnelles (18, 18'), les conducteurs de liaison (19) qui leur sont associées, le système de lignes sans revêtement (16") et les parcours de courant ($a_1$ et $a_2 + a_3$) sont disposés en symétrie spéculaire par rapport à la ligne centrale et l'axe renversé (M) de la vitre transparente (1).

3. Vitre transparente (1) selon la revendication 1 ou 2, **caractérisée en ce que** $VH_1$ = 0,75 à 1,5.

4. Vitre transparente (1) selon l'une des revendications 1 à 3, **caractérisée en ce que** $VH_1$ = 0,8 à 1,2.

5. Vitre transparente (1) selon l'une des revendications 1 à 4, **caractérisée en ce qu'**au moins l'une des lignes sans revêtement (16, 16', 16") s'étend au moins partiellement rectiligne, ondulée, en forme de méandre, en forme de dent de scie et/ou en zigzag.

6. Vitre transparente (1) selon l'une des revendications 1 à 5, **caractérisée en ce qu'**au moins l'une des lignes sans revêtement (16, 16', 16") s'étend au moins partiellement en ligne ininterrompue et/ou comme ligne interrompue d'incisions discrètes.

7. Vitre transparente (1) selon l'une des revendications 1 à 6, **caractérisée en ce qu'**au moins une des lignes sans revêtement (16, 16', 16") est produite par ablation laser du revêtement conducteur d'électricité (8) de la zone chauffante (12) et/ou du revêtement conducteur d'électricité (8' ou 8''').

8. Vitre transparente (1) selon l'une des revendications 1 à 7, **caractérisée en ce qu'**à l'état montée de la vitre transparente (1), le revêtement conducteur d'électricité (8') est disposé le long de la première face inférieure (6') du bord de la vitre (5) et le revêtement conducteur d'électricité (8''') est disposé le long de la première face supérieure (6) du bord de la vitre (5).

**9.** Vitre transparente (1) selon la revendication 8, **caractérisée en ce que** le revêtement conducteur d'électricité (8' ou 8") est disposé dans la région de la zone de stationnement des essuie-glaces inférieure ou supérieure.

**10.** Vitre transparente (1) selon l'une des revendications 1 à 9, **caractérisée en ce que** la largeur des lignes sans revêtement (16, 16', 16") est de 10 $\mu$m à 1 mm.

**11.** Vitre transparente (1) selon l'une des revendications 1 à 10, **caractérisée en ce qu'**au moins une des deux électrodes collectrices (11, 11 ') est divisée en au moins deux zones partielles séparées dans l'espace.

**12.** Procédé de fabrication d'une vitre transparente (1) selon l'une des revendications 1 à 11, comprenant les étapes de fabrication suivantes :

(A) production d'un revêtement conducteur d'électricité (8) ;
(B) production d'au moins une fenêtre de communication (14) sans revêtement dans le revêtement conducteur d'électricité (8) de la zone chauffante (12) ;
(C) formation de

(c1) au moins deux électrodes collectrices reliés aux deux pôles d'une source de tension (11, 11'), qui sont raccordées électriquement avec le revêtement conducteur d'électricité (8), de telle manière que par l'application d'une tension, un courant de chauffage circule par une zone chauffante (12) formée entre lesdites au moins deux électrodes collectrices (11, 11'), et/ou
(c2) au moins deux électrodes collectrices reliés aux deux pôles d'une source de tension (11, 11'), qui sont raccordées électriquement avec le revêtement conducteur d'électricité (8), où au moins l'une des deux électrodes collectrices (11, 11') est divisée en au moins deux zones partielles séparées dans l'espace l'une de l'autre ;

(D) fabrication d'au moins

(d1) deux électrodes additionnelles (18, 18') l'une en face de l'autre en symétrie spéculaire par rapport à la ligne centrale et l'axe renversée (M) de la vitre transparente (1) ;
(d2) deux conducteurs de liaison (19) en symétrie spéculaire l'une en face de l'autre par rapport à la ligne verticale centrale et l'axe renversée (M) de la vitre transparente (1) et associées électriquement aux électrodes additionnelles (18, 18'), qui lors de l'application d'une tension sont reliées électriquement avec l'électrode collectrice (11 ou 11') de polarité opposée, par le revêtement conducteur d'électricité ;
(d3) deux lignes d'alimentation électrique (15, 15'), en symétrie spéculaire l'une par rapport à l'autre et associées électriquement sur l'axe vertical et l'axe renversée (M) de la vitre transparente (1), reliant respectivement au moins une électrode additionnelle (18, 18') avec respectivement au moins une électrode collectrice (11, 11') ou respectivement des lignes d'alimentation électrique au moins une de leur zones partielles, qui s'étendent le long du bord (10) du revêtement associée et le long des deux deuxièmes faces (7, 7") du bord de la vitre,(5) s'étendent au moins partiellement

- dans la bande latérale (9) associée,
- sur la portion associée du bord de revêtement (10) circonférentiel, électriquement découplée de la zone chauffante (12) respectivement par au moins une ligne sans revêtement (16, 16') associée, et/ou
- dans le revêtement conducteur d'électricité (8") associée respectif en dehors de la zone chauffante (12), électriquement découplée par au moins une ligne associée sans revêtement (16,16') ;

(E) formation de

(e1) au moins deux lignes sans revêtement (16 ou 16') le long des lignes d'alimentation (15, 15') sur le côté de la zone chauffante (12) ainsi que
(e2) au moins deux systèmes (16") respectivement d'au moins quatre lignes sans revêtement, se trouvant l'un en face de l'autre en symétrie spéculaire par rapport à la ligne verticale centrale et l'axe renversée (M) de la vitre transparente (1), qui sont disposés de telle manière que, lors de l'application d'une tension, ils dirigent le courant de chauffage circulant en provenance desdites au moins deux électrodes additionnelles (18, 18'), par au moins deux parcours de courant respectives ($a_1$ et $a_2 + a_n$) par lesdites au moins deux conducteurs de liaison (19) qui leur sont associées respectivement, vers ladite au moins une électrode collectrice (11 11') respectivement de polarité opposée, où l'équation I est appliquée pour les parcours de

courant ($a_1$ et $a_2 + a_n$) dans un système:

$$VH_1 = h_1 : b_n = 0,5 \text{ à } 2,0 \qquad (I),$$

où

n représente un nombre entier entre 2 et 30,
($a_1$) désigne le parcours de courant de l'électrode additionnelle (18) à la section opposée du conducteur de liaison (19) le plus proche,
($h_1$) représente la hauteur du parcours de courant $a_1$
($a_2 ... a_n$) désigne les autres parcours de courant,
$b_n$ représente la largeur d'un autre parcours de courant $a_n$ et
($VH_1$) représente le ratio mathématique ($h_1 : b_n$).

(F) où les étapes (B) et (E) du processus se déroulent successivement ou simultanément et
(G) les étapes (C) et (D) se déroulent simultanément ou successivement ou avant ou après les étapes (B) et (E).

**13.** Procédure selon la revendication 12, **caractérisée en ce que** $VH_1 = 0,75$ à $1,5$.

**14.** Procédé selon la revendication 13, **caractérisé en ce que**

- les au moins deux lignes sans revêtement (16, 16') ainsi que les au moins deux systèmes (16") sont produits par ablation laser du revêtement conducteur d'électricité (8) à l'intérieur et à l'extérieur de la zone chauffante (12) et
- les étapes (C) et (D) sont effectuées au moyen de sérigraphie.

**15.** Utilisation de la vitre transparente (1) selon l'une des revendications 1 à 11 et la vitre transparente (1) produite selon le procédé de l'une des revendications 12 à 14 comme élément fonctionnel et/ou décoratif et comme élément pour installation dans les meubles, les appareils électroménagers, le bâtiment et les moyens de transport.

Fig. 1

13

1

9

10

13"

8, 12

**Fig. 2**

2    4    5    3

1

13

5

2

9

10

13"

4

3

8, 12

**Fig. 3**

Fig. 4

EP 3 178 294 B1

**Fig. 5**

EP 3 178 294 B1

Fig. 6

**Fig. 7**

11'  17''  1, D
20  16''
19  19
19  16''

1, A

8, 12  11'

M

16
15
10
9
8''
16''
5, 7

1, D

$a_1$
$h_1$
$b_2$  $b_3$  $b_4$
$a_2$  $a_3$  $a_4$

6'  17''  18  8'  16''  21  19  20  17'  19

EP 3 178 294 B1

32

Fig. 8

**EP 3 178 294 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008018147 A1
- DE 102008020986 A1
- EP 0524527 A2
- DE 102007008833 A1
- WO 2008104728 A2
- EP 1454509 B1
- US 7026577 B2
- WO 2011141487 A1
- WO 2012110381 A1
- EP 1626940 B1
- WO 03051088 A2
- US 5877473 A
- EP 0524537 A2
- DE 202008017611 U1
- EP 0847965 B1
- WO 2012052315 A1